# EUROPEAN PATENT APPLICATION

(11) **EP 4 333 419 A1**
(43) Date of publication of application: **06.03.2024**
(21) Application number: 21938413.8
(22) Date of filing: 29.04.2021
(51) Int. Cl.: H04N 5/232

(54) **SYSTEM, METHOD, AND APPARATUS FOR CONTROLLING PHOTOGRAPHING APPARATUS**

(71) Applicant: SZ DJI Technology Co., Ltd., Shenzhen, Guangdong 518057 (CN)
(72) Inventor: ZHAO, Dongxiang, Shenzhen, Guangdong 518057 (CN); ZHANG, Lin, Shenzhen, Guangdong 518057 (CN); WANG, Shijie, Shenzhen, Guangdong 518057 (CN); TENG, Wenmeng, Shenzhen, Guangdong 518057 (CN)
(74) Representative: Appelt, Christian W.
(86) International application number: PCT/CN2021/091166
(87) International publication number: WO 2022/226934

(57) **Abstract**

The present application discloses a photographing device control system, a method and a device. The photographing device includes a manual lens (100) for taking images, and the control system includes a parameter adjustment ring (10), a motor (20) and a processor (30). The parameter adjustment ring is sleeved on the manual lens, the parameter adjustment ring can be rotated to adjust a lens parameter of the manual lens; the motor is used to drive the parameter adjustment ring to rotate; the motor rotates to different angles based on a first user instruction. The processor is used to obtain lens parameters of the manual lens when the motor is at each angle, and calibrate a conversion relationship between the rotation angle of the motor and the lens parameter of the manual lens based on each angle and corresponding lens parameter. During parameter adjustment, the motor is rotated to adjust the lens parameter of the manual lens. A target rotation angle of the motor is determined based on the conversion relationship and a target lens parameter. The manual lens of the present application can be controlled by an electric signal, which reduces the parameter adjustment time of the manual lens.

## Description

### TECHNICAL FIELD

The present application relates to the field of the control of photographing devices, in particular to a control system of a photographing device, a method and a device.

### BACKGROUND ART

An automatic lens needs to be electrically connected to a photographing device by conductive contacts, so as to realize the control of the motor of the automatic lens by the photographing device and achieve the effect of automatic focusing of the automatic lens. However, for various types of photographing devices, the formats of lens connection contacts may also be different, resulting in very limited models of photographing devices that can be connected to automatic lenses. In addition, most of the automatic lenses are bound with the manufacturers of the photographing device. Moreover, due to the large number of structural components and complicated manufacturing process, the price of automatic lenses is generally relatively high. Compared with automatic lenses, manual lenses have obvious inherent advantages in terms of compatibility and price. However, the lens parameters of current manual lenses can only be adjusted manually. Thus, they have the disadvantages of slow adjustment of lens parameters, difficult adjustment of lens parameters, and high requirements for users' shooting experience. Therefore, the application of manual lenses is far lower than that of automatic lenses.

### SUMMARY

The present application provides a control system of a photographing device, a method and a device.

In a first aspect, embodiments of the present application provide a control system for a manual lens, the photographing device includes a manual lens for capturing images, the control system includes:
a parameter adjustment ring, sleeved on the manual lens, where the parameter adjustment ring is configured to adjust a lens parameter of the manual lens;
a motor configured to drive the parameter adjustment ring to rotate; a processor; and
a processor;
when calibrating a lens parameter of the manual lens, the motor is controlled to rotate to different angles, the processor is used to obtain the lens parameter of the manual lens when the motor is at each angle, and based on each angle and corresponding lens parameters, calibrate a conversion relationship between a rotation angle of the motor and the lens parameter of the manual lens;
wherein when the lens parameter of the manual lens is adjusted fully automatically or semi-automatically, the motor is controlled to rotate to a target angle of rotation to adjust the lens parameters of the manual lens to a target lens parameter, and the target rotation angle of the motor is determined based on the conversion relationship and the target lens parameter.

In a second aspect, embodiments of the present application provide a control method of a photographing device, the method includes:
when calibrating the lens parameter of the manual lens, obtain the lens parameters of the manual lens of the photography device when the motor is controlled to rotate to different angles, a parameter adjustment ring is provided on the manual lens, and the parameter adjustment ring is controlled by a motor to rotate to adjust the lens parameter of the manual lens;
based on each angle and a corresponding lens parameter thereof, calibrate the conversion relationship between the rotation angle of the motor and the lens parameter of the manual lens;
where when the lens parameter of the manual lens is adjusted fully automatically or semi-automatically, the motor is controlled to rotate to the target rotation angle to adjust the lens parameter of the manual lens to the target lens parameter, the target rotation angle of the motor is determined based on the conversion relationship and the target lens parameters.

In a third aspect, embodiments of the present application provide a control device for a photographing device, the device includes:
a storage device for storing a program instruction(s); and
one or more processors to invoke the program instruction(s) stored in the storage device, when the program instruction(s) is executed, the one or more processors individually or collectively implement the method of the second aspect.

In a fourth aspect, embodiments of the present application provide a control system of a photographing device, the system includes:
the control device of the photographing device as mentioned in the third aspect; and
a manual lens.

In a fifth aspect, embodiments of the present application provide a computer-readable storage medium, on which a computer program is stored, and when the program is executed by a processor, the method described in any part of the second aspect is implemented.

In a sixth aspect, embodiments of the present application provide a method for controlling a photographing device, the method includes:
when the photographing device is in a semi-automatic adjustment mode, displaying a feature map of a real-time image captured by a manual lens of the photographing device with the display device, a parameter adjustment ring being provided on the manual lens, and controlling the parameter adjustment ring by a motor to rotate so as to adjust a lens parameter of the manual lens;
displaying a parameter scale in the feature map, where the parameter scale is used to represent range information of the lens parameter;
displaying a first scale position mark of a target lens parameter on the parameter scale and a second scale position mark of a current lens parameter on the parameter scale in the feature map, so as to instruct a user to input a motor rotation adjustment instruction.

In a seventh aspect, embodiments of the present application provide a control device for a photographing device, the device includes:
a storage device for storing a program instruction(s); and
one or more processors to invoke the program instruction(s) stored in the storage device, when the program instruction(s) is executed, the one or more processors individually or collectively implement the method of the sixth aspect.

In an eighth aspect, embodiments of the present application provide a control system of a photographing device, the system includes:
the control device of the photographing device as mentioned in the seventh aspect; and
a manual lens.

In a ninth aspect, embodiments of the present application provide a computer-readable storage medium, on which a computer program is stored, and when the program is executed by a processor, the method described in any part of the sixth aspect is implemented.

In a tenth aspect, embodiments of the present application provide a control system for a manual lens, the control system includes:
a parameter adjustment ring sleeved on the manual lens, and the parameter adjustment ring may be rotated to adjust a lens parameter of the manual lens;
a motor, which is used to drive the parameter adjustment ring to rotate;
a processor; and
a memory;
where the processor is used to calibrate a conversion relationship between the rotation angle of the motor and the lens parameter of the manual lens, and the memory is used to store the conversion relationship;
the processor is further configured to automatically or semi-automatically adjust the lens parameter of the manual lens based on the conversion relationship when the manual lens is in a working state. In an eleventh aspect, embodiments of the present application provide a control method for a manual lens, the method includes:
calibrating a conversion relationship between a rotation angle of a motor and a lens parameter of a manual lens, where the parameter adjustment ring is provided on the manual lens, the parameter adjustment ring is controlled by a motor to rotate so as to adjust the lens parameter of the manual lens, and the conversion relationship is stored by a memory;
when the manual lens is in a working state, automatically or semi-automatically adjusting the lens parameter of the manual lens based on the conversion relationship.

In a twelfth aspect, embodiments of the present application provide a control device for a manual lens, the device includes:
a storage device for storing a program instruction(s); and
one or more processors to invoke the program instruction(s) stored in the storage device, when the program instruction(s) is executed, the one or more processors individually or collectively implement the method of the eleventh aspect.

In a thirteenth aspect, embodiments of the present application provide a control system of a manual lens, the system includes:
the control device of the manual lens as mentioned in the twelfth aspect; and
the manual lens.

In a fourteenth aspect, embodiments of the present application provide a computer-readable storage medium, on which a computer program is stored, and when the program is executed by a processor, the method described in any part of the eleventh aspect is implemented.

According to the technical solutions of the present application, a parameter adjustment ring and a motor that drives the parameter adjustment ring are provided for a manual lens, in addition, before using the manual lens, the conversion relationship between the rotation angle of the motor and the lens parameters of the manual lens are calibrated. This enables the manual lens to be controlled by an electrical signal(s), greatly reduces the parameter adjustment time of the manual lens, lowers the threshold for using the manual lens, and realizes the auxiliary and automatic adjustment function of the lens parameters of the manual lens. It enables manual lenses to automatically adjust parameters like automatic lenses, enriches the functions of manual lenses, and further expands the use scenarios of manual lenses.

### BRIEF DESCRIPTION OF THE DRAWINGS

In order to more clearly illustrate the technical solutions of the embodiments of the present application, the following will briefly introduce the drawings for the description of some embodiments.
FIG. 1 is a schematic diagram of the structure of a control system of a photographing device according to some embodiments of the present application;
FIG. 2 is a block diagram of the structure of a control system of a photographing device according to some embodiments of the present application;
FIG. 3 is a block diagram of the structure of a control system of a photographing device according to some embodiments of the present application;
FIG. 4 is a schematic diagram of a process of calibrating a first conversion relationship between a rotation angle of a motor and a focus distance of a manual lens according to some embodiments of the present application;
FIG. 5 is a schematic diagram of a process of calibrating a conversion relationship between a rotation angle of a motor and a lens parameter(s) of a zoom lens according to some embodiments of the present application;
FIG. 6 is a schematic diagram of a process of calibrating a third conversion relationship between a rotation angle of a motor and an aperture of a manual lens according to some embodiments of the present application;
FIG. 7 is a schematic diagram of a process of semi-automatically adjusting a lens parameter(s) of a manual lens according to some embodiments of the present application;
FIG. 8 is a schematic diagram of a display interface of a display device during assisted focusing according to some embodiments of the present application;
FIG. 9 is a schematic diagram of a display interface of a display device during assisted zooming according to some embodiments of the present application;
FIG. 10 is a schematic diagram of a display interface of a display device during assisted zooming according to some embodiments of the present application;
FIG. 11 is a schematic diagram of a process of automatically adjusting a lens parameter(s) of a manual lens according to some embodiments of the present application;
FIG. 12 is a schematic diagram of a process of a control method of a photographing device according to some embodiments of the present application;
FIG. 13 is a schematic diagram of a process of a control method of a photographing device according to some embodiments of the present application;
FIG. 14 is a schematic diagram of the structure of a control device of a photographing device according to some embodiments of the present application;

Description of the element symbols shown in the drawings:
100. Manual lens;
10. Parameter adjustment ring; 20. Motor; 30. Processor; 40. Transmission assembly; 50. Display device.

### DETAILED DESCRIPTION

The lens parameters of the current manual lens may only be adjusted manually, which has the disadvantages of slow lens parameter adjustment, difficult adjustment of lens parameters, and high requirements for users' shooting experience. For example, manual lenses may only be used for manual focus on a photographing device. It has the shortcomings of slow focusing, easy out of focus, and high requirements for user shooting experience. Therefore, the application of manual lenses is far lower than that of automatic lenses.

In light of the foregoing, a parameter adjustment ring and a motor that drives the parameter adjustment ring are added to a manual lens, and before using the manual lens, a conversion relationship between the rotation angle of the motor and the lens parameters of the manual lens are calibrated. This enables the manual lens to be controlled by an electrical signal(s), which greatly reduces the parameter adjustment time of the manual lens, lowers the threshold for using the manual lens, and realizes the assisted and automatic adjustment function of the lens parameters of the manual lens. It enables manual lenses to automatically adjust parameters like automatic lenses, enriches the functions of manual lenses, and further expands the use scenarios of manual lenses.

With reference to the accompanying drawings for some embodiments, the technical solutions of some embodiments of the present application will be described below in details.

It should be noted that, in the case of no conflict, the features in the following examples and embodiments may be combined with one another.

In the present application, "at least one" means one or more, and "multiple/a plurality of" means two or more. "And/or" describes the association relationship of associated objects, indicating that there can be three types of relationships, for example, A and/or B may mean: A alone, A and B, and B alone, where A and B may be singular or plural. The character "/" generally indicates that the contextual objects are in an "or" relationship. "At least one of the following" or similar expressions refer to any combination of these items, including any combination of single or plural items, for example, at least one item (one) of a, b, or c can represent: a, b, c, a and b, a and c, b and c, or a and b and c, where a, b, and c can be single or plural.

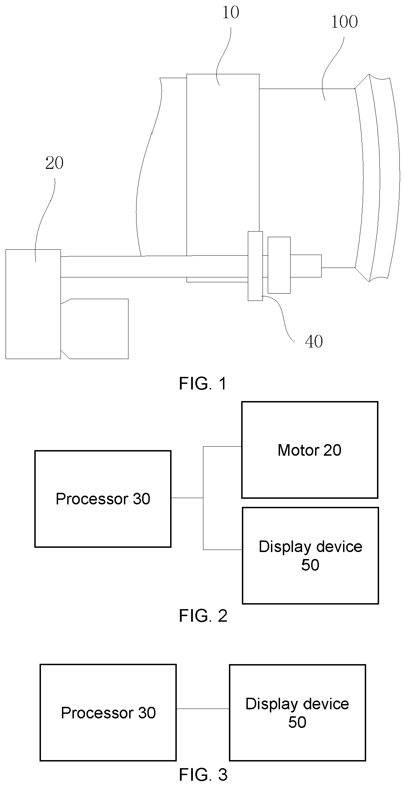

Referring to FIG. 1, the photographing device in some embodiments of the present application may include a manual lens 100 for photographing/capturing images.

Optionally, the manual lens 100 may include a lens barrel and a lens disposed in the lens barrel.

The photography device herein be mounted on a gimbal, and the gimbal may be a two-axis gimbal or a three-axis gimbal. Further, the gimbal may be a handheld gimbal, or may also be an airborne gimbal. Exemplarily, the gimbal may be an airborne gimbal, and the gimbal may be mounted on a movable platform such as an unmanned vehicle or an unmanned aerial vehicle.

The photographing device in some embodiments of the present application may also be mounted on other carriers, such as movable platforms such as unmanned vehicles and unmanned aerial vehicles, or the photographing device may be used alone.

In some embodiments, the present application provides a photographing device control system. Referring to FIG. 1 and FIG. 2, the control system of the photographing device may include a parameter adjustment ring 10, a motor 20 and a processor 30. The parameter adjustment ring 10 may be sleeved on the manual lens 100. In some embodiments, the parameter adjustment ring 10 may be sleeved on the lens barrel. The parameter adjustment ring 10 may be rotated to adjust the lens parameters of the manual lens 100. The motor 20 is used to drive the parameter adjustment ring 10 to rotate. In some embodiments, when the lens parameters of the manual lens 100 are calibrated, the motor 20 is controlled to rotate to different angles. The processor 30 is used to obtain the lens parameters of the manual lens 100 when the motor 20 is at each angle, and calibrate the conversion relationship between the rotation angle of the motor 20 and the lens parameters of the manual lens 100 based on each angle and the corresponding lens parameters. When the lens parameters of the manual lens 100 are adjusted fully automatically or semi-automatically, the motor 20 may be controlled to rotate to a target rotation angle to adjust the lens parameters of the manual lens 100 to a target lens parameter. The target rotation angle of the motor 20 may be determined based on the conversion relationship and the target lens parameter.

The lens parameters may include at least one of focusing distance, focal length or aperture. Correspondingly, the conversion relationship may include at least one of a first conversion relationship between a rotation angle of the motor 20 and the focusing distance of the manual lens 100, a second conversion relationship between a rotation angle of the motor 20 and the focal length of the manual lens 100, or a third conversion relationships between a rotation angle of the motor 20 and the aperture of the manual lens 100. It can be understood that lens parameters are not limited to these types of lens parameters listed above, and may also include other types of lens parameters.

Exemplarily, the manual lens 100 may be a manual fixed focus lens, and the lens parameters may be one or two of focusing distance and aperture. In another example, the manual lens 100 may be a manual zoom lens, and the lens parameters may include any one or more of focal length, focusing distance and aperture.

For example, lens parameters include multiple type parameters, and different types of lens parameters correspond to different parameter adjustment rings 10. Different parameter adjustment rings 10 may be arranged along an optical axis of the manual lens 100. That is, different parameter adjustment rings 10 may be used to adjust different types of lens parameters. Exemplarily, the manual lens 100 is a manual fixed focus lens, and the lens parameter may include focusing distance. The parameter adjustment ring 10 includes a focusing ring for adjusting the focusing distance. The focusing ring may be arranged on an outer side of the manual fixed focus lens. Exemplarily, the manual lens 100 may be a manual zoom lens, and the lens parameter may include focusing distance, focal length and aperture. The parameter adjustment ring 10 may include a zooming ring for adjusting the focal length, a focusing ring for adjusting the focusing distance, and an aperture ring for adjusting the aperture. The zooming ring, the focusing ring and the aperture ring may be arranged along an optical axis of the manual lens 100.

Further optionally, different parameter adjustment rings 10 may be driven by different motors 20. Following the above-mentioned embodiments in which the manual lens 100 is a manual zoom lens, the zooming ring may be driven by a zooming motor to adjust the focal length of the manual lens 100; the focusing ring may be driven to rotate by a focusing motor to adjust the focusing distance of the manual lens 100; and the aperture ring may be driven to rotate by an aperture motor to adjust the aperture size of the manual lens 100. Of course, the same motor may also be used to control one or more parameter adjustment rings.

Referring to FIG. 1 again, a control system of the photographing device in some embodiments of the present application may further include a transmission assembly 40, where one end of the transmission assembly 40 is connected to an output shaft of a motor 20, and the other end thereof is matched with a parameter adjustment ring 10. The output torque of the motor 20 is transmitted to the parameter adjustment ring 10 via the transmission assembly 40 so as to drive the parameter adjustment ring 10 to rotate. In some embodiments, the transmission assembly may include a connecting rod and a transmission gear, where one end of the connecting rod is connected to the motor 20; the transmission gear is sleeved on the other end of the connecting rod. The transmission gear meshes with the parameter adjustment ring 10. It can be understood that the motor 20 may also be replaced with other rotating devices capable of driving the parameter adjustment ring 10 to rotate.

It can be understood that the motor 20 may also be replaced with other rotating devices capable of driving the parameter adjustment ring 10 to rotate.

In some embodiments, a processor 30 (not shown in FIG. 1) may be electrically connected to the motor 20 (as shown in FIG. 2), or may not be electrically connected to the motor 20.

When calibrating the lens parameters of the manual lens 100, the motor 20 may rotate based on a first user instruction, so as to realize the controlled rotation of the motor 20.

Optionally, the first user instruction may be generated by a user operating a handle of the motor 20, where the handle is used to drive the motor 20 to rotate. Exemplarily, when the handle is turned, the motor 20 rotates correspondingly. In some embodiments, the first user instruction may be generated by a user operating ta control device of the photographing device, where the control device may communicate with the motor 20 via the processor 30, or the control device may communicate directly with the motor 20. The control device may be a remote controller, or a smart terminal such as a mobile phone or a smart wearable device.

In some other embodiments, when the lens parameters of the manual lens 100 are calibrated, the processor 30 may control the motor 20 to rotate.

It should be noted that when different parameter adjustment rings 10 are driven to rotate by different motors 20, the different motors 20 may correspond to different handles, so as to control the rotation of the corresponding motor 20 via the handle to realize the rotation adjustment of different parameter adjustment rings 10; alternatively, the rotation of each motor 20 may be controlled by the control device to realize the rotation adjustment of the corresponding parameter adjustment ring 10.

Further, With reference to FIG. 2 and FIG. 3, the control device of the photographing device herein may also include a display device 50. The display device 50 may be in communication with the processor 30. In some embodiments, the display device 50 is a screen of the photographing device. In some embodiments, it may be a screen of a carrier (such as a gimbal) of the photographing device of the display device 50. In some embodiments, the display device 50 may be a display screen of a control device of the photographing device.

In addition, the processor 30 in some embodiments may include a processor of the photographing device, and/or a processor of the carrier (such as a gimbal) of a photographing device, and/or a processor of a control device of a photographing device.

It can be understood that there is a one-to-one correspondence between the angle of the motor 20 and the lens parameter of the manual lens 100, so as to realize the calibration of the conversion relationship.

When calibrating a conversion relationship, different methods may be used to obtain the above-mentioned different angles. Exemplary, in some embodiments, the processor 30 may be electrically connected to the motor 20 to determine different angles based on the driving information of the motor 20, for example, the driving information may be the number of pulses. In some embodiments, the processor 30 may be electrically connected to an angle sensor on the motor 20 to obtain different angles, where the processor 30 may or may not be electrically connected to the motor 20. In some embodiments, different angles may be externally input to the processor 30, for example, during a calibration process, the rotation angle of the motor 20 may be controlled by a user. In this way, a user may input the rotation angle of the motor 20 to the processor 30 via a display screen of the photographing device. Alternatively, a user may input the rotation angle of the motor 20 to the processor 30 via a control device of the photographing device.

Further, the lens parameters in the calibration process may be obtained by way of external input and/or sensor detection on the photographing device.

In some embodiments, the processor 30 may be configured to calibrate the conversion relationship between the rotation angle of the motor 20 and the lens parameters of the lens through interpolation based on each angle and the corresponding lens parameter. In this way, it only needs to be calibrated several times, and then the conversion relationship can be determined by interpolation. The interpolation herein may be linear interpolation or other interpolation methods. The embodiment of the present application does not specifically limit the interpolation manner. In some embodiments, the number of calibrations may be relatively large, and the processor 30 may directly calibrate the conversion relationship between the rotation angle of the motor 20 and the lens parameters of the lens based on each angle and the corresponding lens parameter thereof.

In some embodiments, the conversion relationship may be multiple discrete angles and lens parameters corresponding to the angles, and the lens parameters corresponding to the angles may be stored in a table format. The conversion relationship can also be a function.

A user can calibrate multiple manual lenses 100, and may also calibrate a single manual lens 100 multiple times.

Moreover, after a manual lens 100 in a photographing device is replaced, if the specific type of the manual lens 100 after the replacement is the same as that of the manual lens 100 before the replacement, it is not necessary to re-calibrate the conversion relationship(s), and thus in the subsequent parameter adjustment, the conversion relationship of the latest calibration may be used directly. It is also possible to recalibrate the conversion relationship between the rotation angle of the motor 20 and the lens parameter of the replaced manual lens 100. It can be understood that the recalibration of the conversion relationship may be applicable to the situation that the type of the manual lens 100 after replacement is the same as that of the manual lens 100 before replacement; it may also apply to the case where the type of manual lens 100 after replacement is different from the type of manual lens 100 before replacement.

After the parameter adjustment ring 10 and the motor 20 are installed on the manual fixed focus lens, the above conversion relationships need to be calibrated. In the following, the calibration process will be described in detail by taking the zooming motor for adjusting the focal length of the manual lens 100, the focusing motor for adjusting the focusing distance of the manual lens 100 and the aperture motor for adjusting the aperture of the manual lens 100 as examples.

### I. Calibration of the first conversion relationship

The lens parameters include focusing distance. The different angles mentioned above may include: a first angle for the focusing motor to rotate when the manual lens 100 is aimed at photographing objects at different distances and the sharpness of an image captured by the manual lens 100 is greater than a preset sharpness threshold, where the aforementioned photographing objects at different distances may include different objects at different distances from the manual lens 100 or different parts of the same object, and the different parts have different distances from the manual lens 100. The processor 30 may detect whether the sharpness of the image captured by the manual lens 100 of the object(s) is greater than the preset sharpness threshold based on an existing image algorithm. The processor 30 may display the result on a screen of the photographing device or a screen of a carrier of the photographing device or a screen of a control device, where the preset sharpness threshold may be set as required. In addition, a user may also determine whether the manual lens 100 is in focus successfully by judging whether the image of the object(s) captured by the manual lens 100 is clear/sharp.

The above-mentioned different distances may include: a first distance, a second distance, and at least one distance between the first distance and the second distance, where the first distance is greater than the second distance. Calibration may be performed multiple times to improve the calibration accuracy of the first conversion relationship. It should be noted that the selection of the first distance, the second distance, and the at least one distance between the first distance and the second distance is related to the needs of users. According to the performance of the manual lens 100, the first distance and the second distance may be respectively infinity-far (infinity focus) and infinity-near (macro focus). Of course, the first distance and the second distance may also be set to other values. In addition, the number of different distances herein may be 3 or greater than 3.

In some embodiments, the processor 30 is also used to: when the center of the manual lens 100 is respectively aimed at the photographing objects at the first distance, the second distance, and at least one distance between the first distance and the second distance, calibrate the first angle(s) of the motor 20 corresponding to the first distance, the second distance and at least one distance between the first distance and the second distance respectively.

The distance from the manual lens 100 to the photographing object may be obtained based on the detection of a distance sensor on the photographing device and/or an external input, and the distance sensor is electrically connected to the processor 30. In some embodiments, the distance sensor is arranged in parallel with the manual lens 100. In this way, the distance sensor may accurately measure the current distance from the manual lens 100 to the photographing object. Exemplarily, the distance sensor may be a TOF (time-of-flight) sensor that comes with the photographing device. The processor 30 may record the distance from the manual lens 100 to the object by means of TOF sensor ranging, and/or manually measuring the distance from the manual lens 100 to the object, and then the user inputs the manually measured distance from the manual lens 100 to the photographing object to the processor 30 via the screen of the photographing device or the screen of the carrier of the photographing device or the display screen of the control device.

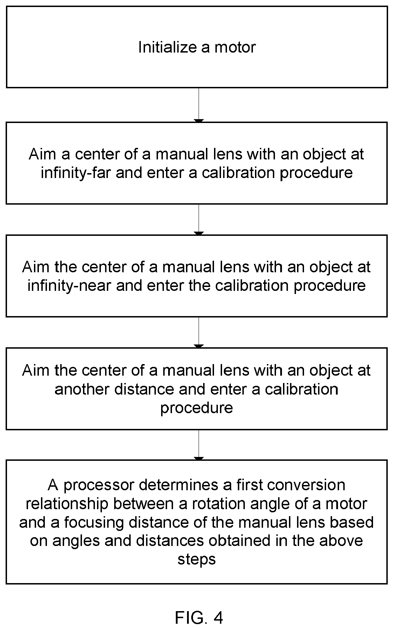

In a feasible embodiment, referring to FIG. 4, the calibration process of the first conversion relationship may include the following steps:
(1) Initialize the focusing motor, for example, a user may initialize the focusing motor by operating the control device of the photographing device, such as controlling the focusing motor to return to an origin thereof.
(2) Align the center of the manual lens 100 with a photographing object away at infinity-far, and enter the following calibration procedure: operate the control device of the photographing device or the handle of the focusing motor to make the focusing motor rotate; when the display device 50 indicates that the sharpness of the object in the image captured by the manual lens 100 is greater than a preset sharpness threshold, the focusing motor stops rotating, and the current first angle of the focusing motor is thus obtained, and then measure the distance from the manual lens 100 to the photographing object by manual measurement or by the TOF sensor on the photographing device, then save the currently obtained first angle of the focusing motor and the distance from the manual lens 100 to the photographing object with the photographing device and/or the carrier of the photographing device and/or the control device of the photographing device, so as to complete the calibration.
(3) Align the center of the manual lens 100 with a photographing at infinity-near, and complete another calibration according to the calibration procedure in step (2).
(4) Align the center of the manual lens 100 with a photographing object at another distance (at least one distance between infinity-far and infinity-near), and complete the rest of the calibration according to the calibration procedure in step (2).
(5) The processor 30 determines a first conversion relationship between the rotation angle of the focusing motor and the focusing distance of the manual lens 100 based on each set of first angle and distance obtained in the above steps. Exemplarily, the processor 30 determines the first conversion relationship by means of interpolation based on each set of first angle and distance obtained in the above steps.

It should be noted that the order of the above steps (2), (3) and (4) may be changed.

In addition, it should be noted that the focusing motor can be initialized before each calibration, or the focusing motor can be initialized only before the first calibration.

The calibration of the first conversion relationship is applicable to manual fixed focus lenses and the manual zoom lenses.

### II. Calibration of the second conversion relationship

The Lens parameters include focal length. It can be understood that the calibration of the second conversion relationship is only applicable to manual zoom lenses. Since the focal length of the manual fixed focus lens is fixed, there is no need to calibrate the focal length of the manual lens 100 and the rotation angle of the zooming motor in this case.

In these embodiments, the different angles herein may include different second angles. The zooming motor rotates to different second angles based on the first user instruction, so that the manual lens 100 is at different focal lengths. Exemplarily, different focal lengths may include: a first focal length, a second focal length, and at least one focal length between the first focal length and the second focal length, where the first focal length is greater than the second focal length. The calibration may be performed multiple times to improve the calibration accuracy of the second conversion relationship. It should be noted that the selection of the first focal length, the second focal length, and the at least one focal length between the first focal length and the second focal length is related to the needs of users. In some embodiments, the first focal length is the maximum focal length of the manual zoom lens, and the second focal length is the minimum focal length of the manual zoom lens. Of course, the first focal length and the second focal length can also be set to other values. In addition, the number of different focal lengths may be 3 or more than 3. In addition, the lens parameters of the manual zoom lens also include the focusing distance. In this regard, for a manual zoom lens, it is necessary to calibrate the first angle(s) of the zooming motor under different focal lengths, and obtain the second conversion relationship between the rotation angle of the zooming motor and the focal length of the manual zoom lens; then, fix the manual zoom lens at one or more focal lengths and calibrate a third rotation angle of the focusing motor under different focusing distances to obtain the first conversion between the rotation angle of the focusing motor and the focusing distance of the manual zoom lens. In some embodiments, it is not necessary to perform a focusing calibration for each focal length of the manual zoom lens; as long as the first conversion relationship between the rotation angle of the focusing motor and the focusing distance of the manual zoom lens for one focal length is calibrated. The first conversion relationship between the rotation angle of the focusing motor of the manual zoom lens and the focusing distance of the manual zoom lens for other focal lengths may be obtained based on the first conversion relationship between the rotation angle of the focusing motor of the manual zoom lens and the focusing distance of the manual zoom lens for the above calibrated focal length.

Specifically, the lens parameters may also include a focusing distance of the photographing device under at least one focal length among different focal lengths. The different angles mentioned above also include: a third rotation angle of the zooming motor to rotate, when the manual lens 100 is aimed at photographing objects at different distances under at least one focal length of the photographing device and when the sharpness of the image captured by the manual lens 100 is greater than a preset sharpness threshold, where the different distances include any one or more of the following: a third distance, a fourth distance, and at least one distance between the third distance and the fourth distance, where the third distance is greater than the fourth distance. In addition, the focusing distance may be obtained based on the detection of a distance sensor on the photographing device and/or an external input. For details, reference may be made to the above specific description of the calibration process of the second conversion relationship.

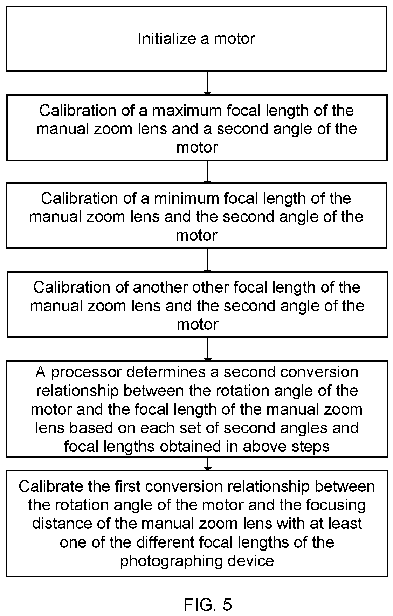

In a feasible embodiment, referring to FIG. 5, the calibration process of the manual zoom lens may include the following steps:
(1) Initiate the zooming motor, reference may be made to the description of the corresponding part in the above-mentioned embodiments.
(2) Calibration of the maximum focal length of the manual zoom lens and the second angle of the zooming motor is as follows: operate the control device of the photographing device or the handle of the zooming motor to make the zooming motor rotate until the manual zoom lens is adjusted to the maximum focal length, the zooming motor stops rotating, and record the current focal length (i.e., the maximum focal length) of the manual zoom lens and the current second angle of the zooming motor, then save the obtained current focal length of the manual zoom lens and current second angle of the zooming motor with the photographing device and/or the carrier of the photographing device and/or the control device of the photographing device, so as to complete the calibration.
(3) Calibration of the minimum focal length of the manual zoom lens and the second angle of the zooming motor is as follows: operate the control device of the photographing device or the handle of the zooming motor to make the zooming motor rotate until the manual zoom lens is adjusted to the minimum focal length, and the zooming motor stops rotating, record the current focal length of the manual zoom lens and the current second angle of the zooming motor, and then save the obtained current focal length of the manual zoom lens and current second angle of the zooming motor with the photographing device and/or the carrier of the photographing device and/or the control device of the photographing device, so as to complete the calibration.
(4) Calibration of other focal lengths of the manual zoom lens (at least one focal length between the maximum focal length and the minimum focal length) and the second angle of the zooming motor is as follows: operate the control device of the photographing device or the handle of the zooming motor to make the zooming motor rotate until the manual zoom lens is adjusted to another focal length, and the zooming motor stops rotating, record the current focal length of the manual zoom lens and the current second angle of the zooming motor, and then save the obtained current focal length of the manual zoom lens and current second angle of the zooming motor with the photographing device and/or the carrier of the photographing device and/or the control device of the photographing device, so as to complete the calibration.
(5) The processor 30 may determine the second conversion relationship between the rotation angle of the zooming motor and the focal length of the manual zoom lens based on each set of second angle and focal length obtained in the above steps. Exemplarily, the processor 30 may determine the second conversion relationship by means of interpolation based on each set of second angle and focal length obtained in the above steps.
(6) Calibrate the first conversion relationship between the rotation angle of the focusing motor and the focusing distance of the manual zoom lens under at least one of the above-mentioned different focal lengths of the photographing device. For details, reference may be made to the descriptions of corresponding parts in the above embodiments.

It should be noted that the order of the above steps (2), (3) and (4) may be changed.

### III. Calibration of the third conversion relationship

The lens parameters include aperture, and the above-mentioned different angles may include different fourth angles. The aperture motor rotates to different fourth angles based on the first user instruction, so that the manual lens 100 has different apertures. Exemplarily, the above-mentioned different apertures may include: a first aperture, a second aperture, and at least one aperture between the first aperture and the second aperture, where the first aperture is larger than the second aperture. It should be noted that the selection of the first aperture, the second aperture, and the at least one aperture between the first aperture and the second aperture is related to the needs of users. In some embodiments, the first aperture is the maximum aperture of the manual lens 100, and the second focal length is the minimum aperture of the manual lens 100. Of course, the first aperture and the second aperture may also be set to other sizes. In addition, the number of different apertures may be 3 or more than 3.

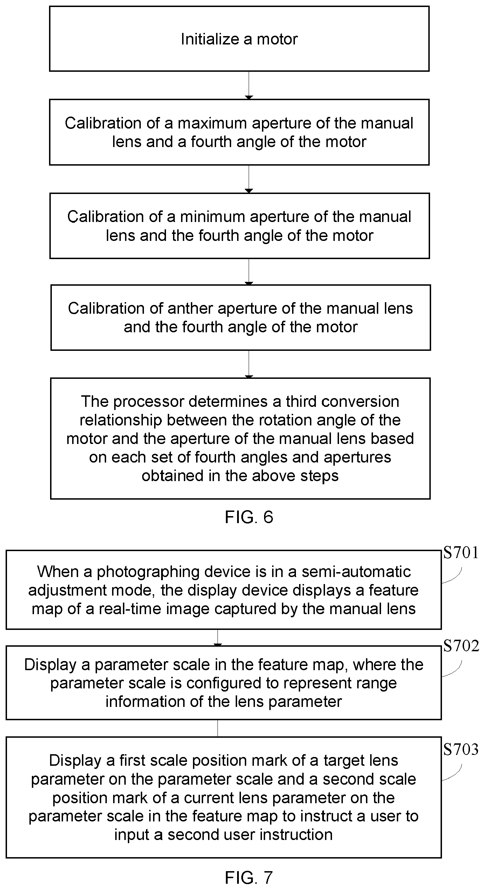

In a feasible embodiment, with reference to FIG. 6, the calibration process of the third conversion relationship may include the following steps:
(1) Initiate the aperture motor, reference may be made to the description of the corresponding part in the above-mentioned embodiments.
(2) Calibration of the maximum aperture of the manual lens 100 and the fourth angle of the aperture motor: operate the control device of the photographing device or the handle of the aperture motor to make the aperture motor rotate until the manual lens 100 is adjusted to the maximum aperture, the aperture motor stops rotating, record the current aperture (i.e., the maximum aperture) of the manual lens 100 and the current fourth angle of the aperture motor, and then save the obtained current aperture of the manual lens 100 and current fourth angle of the aperture motor with the photographing device and/or the carrier of the photographing device and/or the control device of the photographing device, so as to complete the calibration.
(3) Calibration of the minimum aperture of the manual lens 100 and the fourth angle of the aperture motor: operate the control device of the photographing device or the handle of the aperture motor to make the aperture motor rotate until the manual lens 100 is adjusted to the minimum aperture, and the aperture motor stops rotating, record the current aperture of the manual lens 100 and the current fourth angle of the aperture motor, and then save the obtained current aperture of the manual lens 100 and current fourth angle of the aperture motor with the photographing device and/or the carrier of the photographing device and/or the control device of the photographing device, so as to complete the calibration.
(4) Calibration of other apertures (at least one aperture between the maximum aperture and the minimum aperture) of the manual lens 100 and the fourth angle of the aperture motor: operate the control device of the photographing device or the handle of the aperture motor to make the aperture motor rotate until the manual lens 100 is adjusted to other apertures, the aperture motor stops rotating, record the current aperture of the manual lens 100 and the current fourth angle of the aperture motor, and then save the obtained current aperture of the manual lens 100 and current fourth angle of the aperture motor with the photographing device and/or the carrier of the photographing device and/or the control device of the photographing device, so as to complete the calibration.
(5) The processor 30 determines a third conversion relationship between the rotation angle of the aperture motor and the aperture of the manual lens 100 based on each set of fourth angle and aperture obtained in the above steps. Exemplarily, the processor 30 determines the third conversion relationship by means of interpolation based on each set of fourth angle and aperture obtained in the above steps.

It should be noted that the order of the above steps (2), (3) and (4) may be changed.

The calibration of the third conversion relationship is applicable to manual fixed focus lenses and manual zoom lenses.

Optionally, during a calibration process, the processor 30 may also be used to: if a calibration data deletion instruction is received, the corresponding angles and lens parameters may be deleted according to the calibration data deletion instruction, so as to remove non-compliant calibration data in real time. The data deletion instruction may be generated by a user through operating the screen of the photographing device or the screen of the carrier of the photographing device or the screen of the control device, or may be generated in other ways. Exemplarily, when each calibration is completed, the screen of the photographing device or the screen of the carrier of the photography device or the screen of the control device may be used to indicate to the user in the form of a pop-up dialog box: choose to save the angles and lens parameters of the current calibration, or delete the angles and lens parameters of the current calibration.

Optionally, the corresponding angles and lens parameters of the above calibrations may be stored in one-to-one correspondence. For example, the corresponding angles and lens parameters of the above-mentioned calibrations may be saved in one-to-one correspondence based on a table, text or other means. The processor 30 may also be used to: based on the angles and the corresponding lens parameters and/or conversion relationships generate a calibration file (that is, the table, text, etc.); in addition, further the processor 30 may also be used to: if a calibration data modification instruction is received, the corresponding angles and lens parameters in a calibration file may be modified according to the calibration data modification instruction. The calibration data modification instruction may be generated by a user through operating the screen of the photographing device or the screen of the carrier of the photographing device or the screen of the control device, or may be generated in other ways. The specific method of modifying the calibration data may adopt certain existing methods of modifying the data.

In the above calibration process, the number of calibrations may be set according to needs. In theory, the more calibration times, the better the focusing, zoom, and/or aperture adjustment effect, but this may increase the calibration time. Therefore, it is better to set the calibration times as 5 times.

There is no limit to the manner in which a user may manually control the rotation of the motor 20; it may include operating handles, buttons, touch screens, and the like.

In addition, the recording of the calibration data is not limited to the operation screen recording, and may also be recorded by means of voice recognition, remote control, etc.

After the above conversion relationships have been calibrated, semi-automatic adjustment (also called assisted parameter adjustment) or fully automatic adjustment of the lens parameters of the manual lens 100 may be realized based on the conversion relationships, that is, the adjustment mode of the manual lens 100 in some embodiments of the present application may include fully automatic adjustment mode and/or semi-automatic adjustment mode.

In some embodiments, the manual lens control system of the present application may also include a memory (not shown) for storing the above-mentioned conversion relationships, so that subsequently the processor 30 may recall/invoke the above-mentioned conversion relationships from the memory when performing an automatic or semi-automatic adjustment.

In some embodiments, the processor 30 of the present application may also be configured to perform automatic or semi-automatic adjustment of the lens parameters of the manual lens based on the above conversion relationships when the manual lens 100 is in a working state.

Optionally, the processor 30 may be further configured to: enter the fully automatic adjustment mode when receiving an instruction to start the fully automatic adjustment mode.

Optionally, the processor 30 may be further configured to: enter the semi-automatic adjustment mode when receiving an instruction to start the semi-automatic adjustment mode.

In some embodiments, the above instruction may be triggered by a user. For example, a user may generate the above instruction by operating a first control part of the photographing device or a second control part on the carrier of the photographing device or the control device of the photographing device, where the first control part and the second control part may be buttons, knobs or other types of control parts.

In some other embodiments, the above instruction may be triggered based on that a photographing scene meeting a preset condition. For example, automatic control can be faster when tracking high-speed moving objects. Exemplarily, the processor 30 enters the fully automatic adjustment mode when the speed of an object in an image captured by the manual lens 100 is greater than or equal to a preset speed threshold as determined based on an image processing method.

Next, the semi-automatic adjustment and fully automatic adjustment will be described respectively.

### I. Semi-automatic adjustment mode

In some embodiments, the photographing device of the present application may include a semi-automatic adjustment mode. In the semi-automatic adjustment mode of the photographing device, the motor 20 may rotate based on a second user instruction. In some embodiments, a user may rotate the motor 20 based on a prompt output by the processor 30 via the display device 50 to realize the assisted adjustment of the lens parameters. Compared with the existing manual adjustment method, the efficiency is greatly improved.

In these embodiments, the processor 30 may be electrically connected to the motor 20, or the processor 30 may not be electrically connected to the motor 20.

The second user instruction may be generated based on different ways. Exemplarily, in embodiments, the second user instruction may be generated by the user operating the motor 20. That is, the user turns/rotates the motor 20 directly. In some embodiments, the second user instruction may be generated by the user operating a handle of the motor 20, where the handle is used to drive the motor 20 to rotate. In some embodiments, the second user instruction may be generated by a device for operating an external control, where the external control device (which may be the control device of the photographing device) communicates with the processor 30 via the photographing device. The processor 30 is used to control the rotation of the motor 20 based on the second user instruction. In some embodiments, the external control device communicates with the photographing device in a wireless manner to realize remote control.

FIG. 7 is a schematic diagram of a process of semi-automatically adjusting a lens parameter(s) of the manual lens 100. As shown in Fig. 7, when adjusting the lens parameters of the manual lens 100 in the semi-automatic adjustment mode, the processor 30 is configured to implement steps S701-S703.

In S701, when the photographing device is in the semi-automatic adjustment mode, the display device 50 displays a feature map of a real-time image captured by the manual lens 100.

In S702, display a parameter scale in the feature map, where the parameter scale is configured to represent range information of the lens parameter.

In S703, display a first scale position mark of a target lens parameter on the parameter scale and a second scale position mark of a current lens parameter on the parameter scale in the feature map to instruct a user to input a second user instruction.

Optionally, in the feature map, the feature information of the target object is highlighted in a preset display mode, where the preset display mode may include a preset shape or color or a combination of the foregoing.

In addition, the first scale position mark and the second scale position mark may be set as required, such as arrows or other marks.

Further, the processor 30 may also be used to display a real-time image via the display device 50, and mark the target object in the real-time image. The target object is the content that the user is interested in during the current parameter adjustment, such as human faces, fruits, cars, animals and other items. In some embodiments, the target object is selected from a plurality of objects photographed by the manual lens 100. For example, the selection may be based on a user's instruction or based on captured image information. Understandably, the target object may also be determined in other ways.

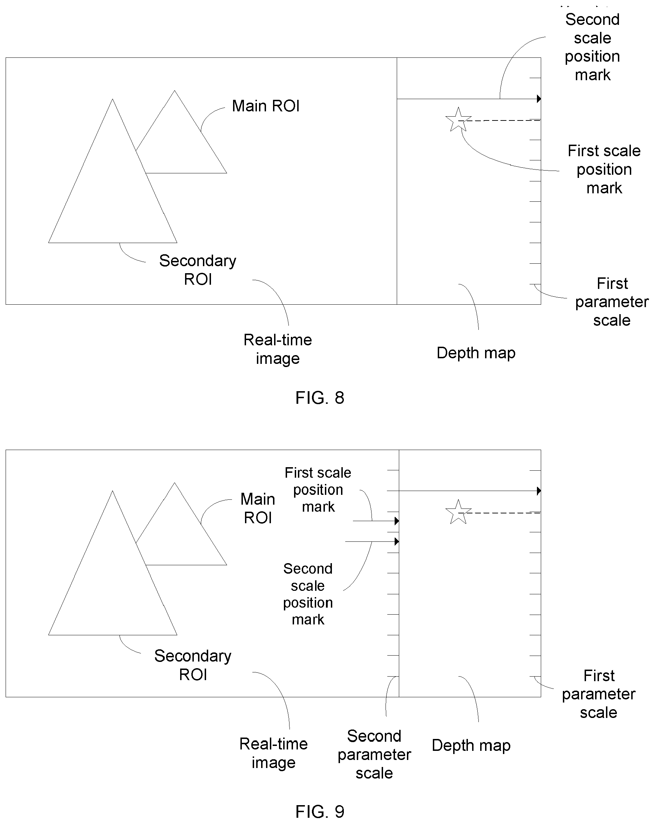

Exemplarily, for the convenience of interaction, the processor 30 displays the real-time image with a screen of the photographing device or a screen of a carrier of the photographing device or a screen of the control device, and prompts with an ROI (region of interest) in the image of the embodiments. A main ROI and a secondary ROI shown in FIG. 8 can be marked respectively based on the frame selection method, so as to prompt a user to select one of them as the target object. In these embodiments of the present application, the content of the ROI is transmitted as the center coordinates of the ROI (such as the coordinates of the center of the human eye in the current frame).

Next, the semi-automatic adjustment of the lens parameters of the manual lens 100 will be described with an example in which the zooming motor is used to adjust the focal length of the manual lens 100, the focusing motor is used to adjust the focusing distance of the manual lens 100, and the aperture motor is used to adjust the aperture of the manual lens 100.

### (I) Assisted focusing

The lens parameters include focusing distance; the conversion relationships include a first conversion relationship between the rotation angle of the focusing motor and the focusing distance of the manual lens 100. In some embodiments, the feature map includes a depth map; the parameter scale includes a first parameter scale. The first parameter scale is used to represent the range information of the focusing distance of the manual lens 100, where in the depth map, the positions where the depth information of different objects are displayed is determined based on the distances between the different objects and the photographing device and the first conversion relationship. Therefore, the depth information is associated with the first parameter scale, and the range reference between the focusing distance and the depth information is unified.

In these embodiments, the target lens parameters include the actual distance from the target object in a real-time image to the manual lens 100, and the current lens parameters include the current focusing distance of the manual lens 100. The first scale position mark is set at the position of the target object in the depth map, and may indicate the position of the distance of the target object on the first parameter scale. The second scale position mark is used to indicate the actual distance from the target object in the real-time image to the manual lens 100.

The actual distance may be obtained based on the distance sensor on the photographing device. The distance sensor may be arranged in parallel with the manual lens 100 to ensure the measurement accuracy of the actual distance. In fact, the actual distance may also be obtained based on an external distance sensor, or based on manual measurement.

Optionally, the second scale position mark includes a first arrow, and the first arrow points to the position corresponding to the current focusing distance on the first parameter scale, thereby prompting a user for the current focusing distance of the manual lens 100.

Further optionally, the first parameter scale may be displayed in a first direction of the depth map. The extending direction of the first arrow is a second direction. The first direction is one of the height and width of the depth map, and the second direction is the other one of the height and width of the depth map. As shown in FIG. 8, the first direction is the height direction of the depth map, and the second direction is the width direction of the depth map. It can be understood that the first direction and the second direction may also be other directions.

Optionally, as shown in FIG. 8, the first parameter scale is displayed on a side of the depth map. If the first parameter scale is displayed on the right side of the depth map, this can present the first parameter scale from blocking the depth map. Of course, the first parameter scale may also be displayed in other areas of the depth map.

Optionally, again as shown in FIG. 8, the first arrow extends to two ends of the second direction to realize obvious prompts to users. Of course, the first arrow may also only extend to the end of the second direction towards the end of the first parameter scale.

In these embodiments, when the focusing motor rotates based on the second user instruction, the first arrow moves along the first direction until the first arrow moves in the first direction to the position mark of the first scale coincident with the location mark. A user may determine whether the current focusing distance of the manual lens 100 is equal to the actual distance from the target object in the real-time image to the manual lens 100 by observing whether the first arrow in the depth map coincides with the first scale position mark. Therefore, it may be determined whether the focusing of the manual lens 100 is currently finished. Specifically, when the first arrow in the depth map does not coincide with the first scale position mark, it indicates that the current focusing distance of the manual lens 100 is not equal to the actual distance from the target object in the real-time image to the manual lens 100. Thus, the user may make the focusing motor rotate by operating the handle or the control device, thereby adjusting the focusing distance of the manual lens 100. When adjusting the focusing distance of the manual lens 100, the first arrow may move along the first direction. When the first arrow in the depth map coincides with the first scale position mark, it indicates that the current focusing distance of the manual lens 100 is equal to the actual distance from the target object in the real-time image to the manual lens 100, and thus the focusing is finished. It should be noted that, in some embodiments, when the first arrow passes through the center of the first scale position mark, it indicates that the first arrow coincides with the first scale position mark. When the first arrow does not pass through the center of the first scale position mark, it indicates that the first arrow does not coincide with the first scale position mark.

If the target object is stationary, the position of the first ruler position mark remains unchanged; if the target object is moving, the position of the first scale position mark may change. In some embodiments, when performing the assisted focusing process, the display device 50 may also display other contents, such as displaying the numerical value of the actual distance from the target object in the real-time image to the manual lens 100.

Whether the focusing of the manual lens 100 is finished may be determined by whether the first scale position mark and the second scale position mark currently displayed on the display device 50 coincide, so as to achieve the effect of assisted focusing. This may replace the existing manual focusing method in which users observes whether the real-time image is clear with the naked eyes. Moreover, the assisted focusing method of herein may not be disturbed by environmental factors such as light and temperature. While reducing the focusing time, it also greatly improves the accuracy of focusing.

### (II) Assisted zooming

The lens parameters include focal length. Correspondingly, the conversion relationships include a second conversion relationship between the rotation angle of the zooming motor and the focal length of the manual lens 100. The parameter scale includes a second parameter scale. The second parameter scale is used to represent the range information of the focal length of the manual lens 100. In a real-time image, the display sizes and/or display positions of different objects may be determined based on the actual sizes of the different objects in the real-time image and the second conversion relationship, thereby associating the display sizes and/or display positions of the objects in the real-time image with the second parameter scale, and unifying the scale reference between the display size and/or display position of an object in the real-time image and the focal length.

In these embodiments, the target lens parameters include the corresponding target focal length of the manual lens 100 when the target object is displayed in the real-time image with a target size and/or a target position. The current lens parameters include the current focal length of the manual lens 100. The target size and/or target location may be set by the user. In some embodiments, the first scale position mark is used to indicate the target focal length, and the second scale position is used to indicate the current focal length size.

Optionally, with reference to FIG. 9, the first scale position mark includes a second arrow, and the second arrow points to the corresponding target focal length on the second parameter scale. The second scale position mark includes a third arrow, and the third arrow points to the current focal length on the second parameter scale. It can be understood that, the first scale position mark and the second scale position mark may also adopt other identification methods.

Optionally, with reference to FIG. 9 again, the second parameter scale is displayed in the third direction of the real-time image. The extension direction of the second arrow and the third arrow is the fourth direction. The third direction is one of the height and width of the real-time image, and the fourth direction is the other one of the height and width of the real-time image. It can be understood that the third direction and the fourth direction may also be set as other directions.

Optionally, with reference to FIG. 9, the second parameter scale may be displayed on a side of the real-time image, such as the second parameter scale may be displayed on the right side of the real-time image. This may avoid blocking the depth map by the second parameter scale. Of course, the second parameter scale may also be displayed in other areas of the real-time image. For example, the second parameter scale may be displayed to the right of the first parameter scale.

Optionally, the size and shape of the second arrow and the third arrow may be the same. Of course, the size and shape of the second arrow and the third arrow may also be different.

In these embodiments, when the zooming motor rotates based on the second user instruction, the third arrow moves along the third direction until it coincides with the second arrow in the third direction. A user may determine whether the current focal length of the manual lens 100 is equal to the corresponding target focal length of the manual lens 100 when the target object is displayed in the real-time image with the target size and/or target position by means of observing whether the second arrow and the third arrow overlap in the real-time image. Thus may be determined whether the adjustment of the focal length of the manual lens 100 is finished. Specifically, when the second arrow does not coincide with the third arrow in the real-time image, it indicates that the current focal length of the manual lens 100 is not equal to the corresponding target focal length of the manual lens 100 when the target object is displayed in the real-time image with the target size and/or target position. The user may rotate the zooming motor by operating the handle or the control device, thereby adjusting the focal length of the manual lens 100. In this way, the display size and/or display position of the target object (that is, the main region of interest, ROI) in the real-time image changes accordingly. At the same time, during the process of adjusting the focal length of the manual lens 100, the third arrow moves along the third direction. When the second arrow coincides with the third arrow in the real-time image, it indicates that the current focal length of the manual lens 100 is equal to the corresponding target focal length of the manual lens 100 when the target object is displayed in the real-time image with the target size and/or target position, and the adjustment of the focal length is finished.

Further, when performing the assisted zooming, the display device 50 may also display other contents, such as displaying the numerical value of the current focal length of the manual lens 100.

It should be noted that, when the target object is displayed in the real-time image with the target size and/or target position by the above-mentioned assisted zooming method, the target object may be blurred in the real-time image. A user may achieve fast focusing through the assisted focusing described in the above embodiments. In some embodiments, the lens parameters also include focusing distance. The adjustment of focusing distance may be performed after the adjustment of focal length. For details, reference may be made to the description of the assisted focusing in the foregoing embodiments, and details are not repeated herein.

Moreover, since the focal length of the manual lens 100 may change, the calculation of the current focusing distance of the manual lens 100 may correct the current focusing distance of the manual lens 100 according to a specific proportional relationship based on the calibrated focal length and the current focal length of the manual lens 100.

In some embodiments, when the assisted focusing is performed, the depth map may be displayed overlaid on top of one side of the real-time image, for example, the depth map may be displayed overlaid on top of the right side of the real-time image.

### (III) Assisted exposure

The lens parameters include aperture, and the conversion relationships includes a third conversion relationship between the rotation angle of the aperture motor and the aperture of the lens. In some embodiments, the feature map includes a brightness map, and the parameter scale includes a third parameter scale. The third parameter scale is used to represent the range information of the brightness map based on the display reference of the brightness information of the third parameter scale.

In these embodiments, the target lens parameters include the target brightness of a target object in the real-time image. The current lens parameters include the current brightness of the target object in the real-time image, and the second scale position mark is set at the position of the target object in the brightness map. The first scale position mark is used to indicate the target brightness of the target object in the real-time image. The second scale position is used to indicate the current brightness of the target object in the real-time image.

Optionally, the magnitude (value/size) of the target brightness may be set by a user. In some embodiments, the target brightness may be determined based on the brightness information of different positions of the real-time image, the different locations herein may be surrounding areas from the center of the target object by a preset distance. The brightness information of different positions of the real-time image may be considered when setting the target brightness. After adjusting the aperture size of the manual lens 100 based on the target brightness, the brightness information of the real-time image may not be too out of line, which may be more comply with user habits.

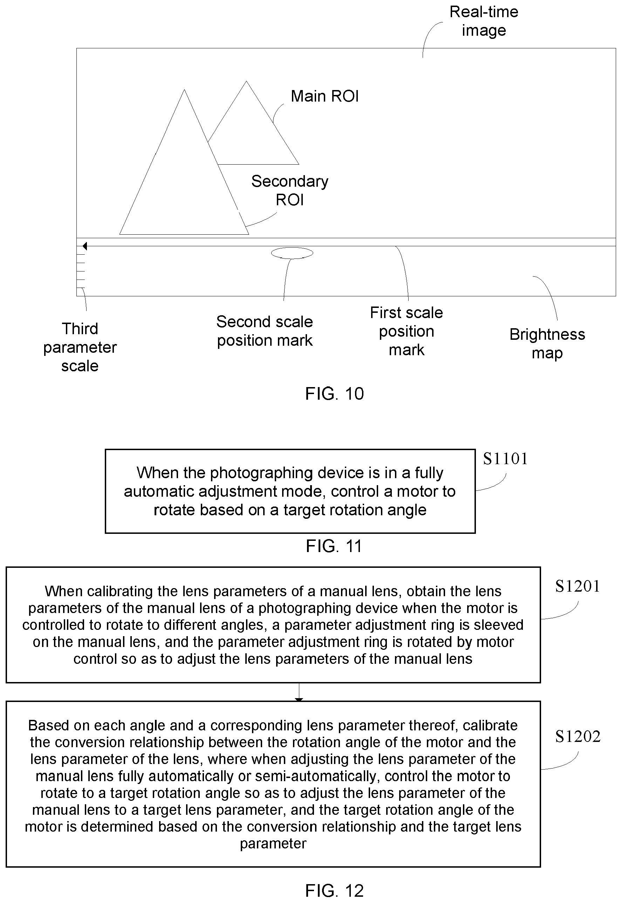

Optionally, with reference to FIG. 10, the first scale position mark includes a fourth arrow, and the fourth arrow points to a position corresponding to the target brightness on the third parameter scale. It can be understood that other marking methods may also be used for the first scale position marking.

Optionally, with reference to FIG. 10, the third parameter scale is displayed in a fifth direction in a brightness map, and the extension direction of the fourth arrow is a sixth direction. The fifth direction is one of the height and width of the brightness map, and the sixth direction is the other one of the height and width of the brightness map. It can be understood that the fifth direction and the sixth direction may also be set as other directions.

Optionally, with reference to FIG. 10, the third parameter scale may be displayed on a side of the brightness map, for example, the third parameter scale may be displayed on a left side of the brightness map, which may prevent the third parameter scale from blocking the depth map. Of course, the third parameter scale may also be displayed in other areas of the brightness map.

Optionally, with reference to FIG. 10, the fourth arrow may extend to both ends of the sixth direction to provide a clear reminder/prompt to the user. Certainly, the fourth arrow may also only extend to the end of the sixth direction towards an end of the third parameter scale.

In these embodiments, when the aperture motor rotates based on the second user instruction, the second scale position mark moves along the fifth direction until it coincides with the fourth arrow in the fifth direction. The user may judge whether the current brightness of the target object in the real-time image is equal to the target brightness of the target object in the real-time image by means of observing whether the second scale position mark in the brightness map coincides with the fourth arrow, thereby determine whether the adjustment of the aperture size of the manual lens 100 is finished. Specifically, when the second scale position mark in the brightness map does not coincide with the fourth arrow, it indicates that the current brightness of the target object in the real-time image is not equal to the target brightness of the target object in the real-time image. Thus, a user may rotate the aperture motor by operating the handle or the control device, thereby adjusting the aperture size of the manual lens 100. When adjusting the aperture size of the manual lens 100, the second scale position mark may move along the fifth direction. When the second scale position mark in the brightness map coincides with the fourth arrow, it indicates the current brightness of the target object in the real-time image is equal to the target brightness of the target object in the real-time image. Thus, the aperture adjustment of the manual lens 100 is finished. It should be noted that, in some embodiments, when the fourth arrow passes through the center of the second scale position mark, it indicates that the fourth arrow coincides with the position mark of the second scale; when the fourth arrow does not pass through the center of the second scale position mark, it indicates that the fourth arrow does not coincide with the second scale position mark.

Further, when performing assisted exposure, the display device 50 may also display other contents, such as displaying the current brightness value of the target object in the real-time image.

Optionally, when the assisted exposure is performed, the brightness map may be displayed overlaid on top of the real-time image, for example, the brightness map may be displayed overlaid below the real-time image.

### II. Fully automatic adjustment

The photographing device includes a fully automatic adjustment mode. FIG. 11 is a schematic flowchart of automatically adjusting the lens parameters of the manual lens 100 according to some embodiments of the present application. As shown in FIG. 11, when automatically adjusting the lens parameters of the manual lens 100, the processor 30 may be configured to implement step S1101.

In S1101, when the photographing device is in the fully automatic adjustment mode, control a motor 20 to rotate based on a target rotation angle.

The implementation of S1101 will be described next with an example in which the zooming motor is used for adjusting the focal length of the manual lens 100, the focusing motor for adjusting the focusing distance of the manual lens 100, and the aperture motor for adjusting the aperture of the manual lens 100.

### (I) Auto focusing

The lens parameters include focusing distance, and the conversion relationships include the first conversion relationship between the rotation angle of the focusing motor and the focusing distance of the lens. The target rotation angle may be determined based on the first conversion relationship and the distance information from the target object currently photographed by the manual lens 100 to the manual lens 100. Based on the target rotation angle, the processor 30 may control the rotation of the focusing motor to realize the automatic focusing function of the manual lens 100. For example, the first conversion relationship may be a function, and the distance information from the target object currently photographed by the manual lens 100 to the manual lens 100 may be directly brought into the function to determine the target rotation angle.

The distance information from the target object currently photographed by the manual lens 100 to the manual lens 100 may be determined based on the actual distance detected by the distance sensor on the photographing device.

As limited by the measurement range of the distance sensor on the photographing device, in order to improve the accuracy of the distance information from the target object currently photographed by the manual lens 100 to the manual lens 100, different methods may be used to determine the distance information from the target object currently photographed by the manual lens 100 to the manual lens 100. In some embodiments, when the actual distance detected by the distance sensor on the photographing device is less than or equal to a preset distance threshold, the distance information from the target object currently photographed by the manual lens 100 to the manual lens 100 may be determined based on the above-mentioned actual distance; when the actual distance detected by the distance sensor on the photographing device is greater than the preset distance threshold, the distanced detected by the sensor is no longer used for the auto focusing process. Rather, an existing image processing method may be used to determine whether the lens parameters adjustment of the manual lens is finished, such as whether the focusing is finished. The preset distance threshold may be determined based on the measurement range of the distance sensor. If the distance range is greater than the preset distance threshold, the measurement accuracy of the distance sensor decreases; while if the distance range is less than or equal to the preset distance threshold, the measurement accuracy of the distance sensor meets user requirements.

When the actual distance obtained by the detection of the distance sensor on the photographing device is in a different value range, the processor 30 may control the rotation of the focusing motor in a different way based on the target rotation angle.

### 1. The actual distance detected by the distance sensor on the photographing device is less than or equal to the preset distance threshold.

The processor 30 may be used to: when the actual distance detected by the distance sensor on the photographing device is less than or equal to the preset distance threshold, control the focusing motor to rotate the target rotation angle. That is to say, the processor 30 controls the focusing motor to rotate by the target rotation angle in a single step.

In this case, the realization of the automatic focusing function may be realized by a multi-chip system, or may also be completed by a single-chip system.

Optionally, the photographing device is carried on a gimbal, and the processor 30 includes a first processor and a second processor, where, the first processor is configured to obtain the real-time image captured by the manual lens 100, and transmit the real-time image to the second processor; the second processor is configured to obtain an actual distance detected by a distance sensor, and perform feature extraction on the real-time image based on the actual distance to obtain the target object and the first position information of the target object in the real-time image, and send the first position information to the gimbal. The gimbal rotates based on the first position information, so that the target object is at a preset position in the real-time image. The use of two processors 30 reduces the performance requirements when one processor 30 is used.

Optionally, the second processor is further configured to transmit the depth/distance/feature information of each pixel of the real-time image or the depth information of each pixel of the real-time image and the first position information of the target object in the real-time image to the first processor. The first processor is configured to display highlight the feature information of the target object in the above feature map in a preset display manner based on the depth information of each pixel of the real-time image and/or the first position information of the target object in the real-time image.

In these embodiments, the ROI may be determined by the second processor based on a global depth map or indicated by the first processor.

Optionally, the depth information of each pixel in the corresponding real-time image carries the time information and ID information, so as to keep the synchronization of the image data information.

2. The actual distance detected by the distance sensor on the photographing device is greater than a preset distance threshold.

The processor 30 may be configured to: when the actual distance detected by the distance sensor on the photographing device is greater than the preset distance threshold, based on a preset rotation angle, control the focusing motor to gradually rotate until the focusing motor rotates to a target rotation angle. In this case, the processor 30 adopts a strategy of gradually controlling the rotation of the focusing motor.

Optionally, the processor 30 is configured to: control the focusing motor to gradually rotate by way of contrast CDAF (contrast detection auto focus) or phase PDAF (phase detection auto focus) focusing control based on a preset rotation angle until the focusing motor rotates to a target rotation angle. In this case, the size of the preset rotation angle may be set as needed, such as 1 degree or other values. It is understandable that the contrast CDAF or phase PDAF may also be replaced by other existing focusing methods.

In one example, the processor 30 may include a chip 1 (that is, the second processor) and a chip 2 (that is, the first processor), and the auto focusing process may include the following steps:
(1) The chip 2 obtains a real-time image taken by the manual lens 100, and sends the real-time image to the chip 1 via a hardware communication.
(2) A perception module running on the chip 1 performs alignment, based on the depth information measured by a TOF distance sensor and a depth map generated with the real-time image, and based on received image resolution of the chip 2.
(3) The perception module sends an aligned depth map to a machine learning module on chip 1 and an AF (auto focus) module on chip 2, and sends the real-time image obtained by chip 2 to the machine learning module.
(4) The machine learning module performs feature identification on the real-time image based on the received depth information measured by the TOF distance sensor, extracts ROI coordinate data from a current real-time image, and sends the ROI coordinate data to the AF module of chip 2.
(5) The machine learning module sends the coordinate data of an ROI center point to a gimbal based on the ROI coordinate data.
(6) The gimbal calculates the angles to rotate for motors 20 of the gimbal based on the coordinate data of the ROI center point, and controls the motors 20 of the gimbal to rotate to corresponding positions thereof.
(7) The AF nodule of chip 2 fuses the received depth map and ROI coordinate data, obtains distances from each ROI coordinate point to the current manual lens 100, and obtains TOF-ROI data.
(8) Due to the range limitation of TOF distance measurement, in order to focus on a target outside the TOF range, the AF module extracts an ROI from the current real-time image by way of image processing, and obtains CDAF-ROI data with optical phase information.
(9) The AF module makes decisions based on the TOF-ROI data and CDAF-ROI data, calculates a rotation angle for the focusing motor, and controls the focusing motor to rotate (if the distance is too close or too far away, the confidence of the TOF-ROI data may be reduced; in such a case, the CDAF-ROI data will be used for focusing).
(10) Repeat the above steps until the focusing process is finished.

The ROI calculation and AF calculation are performed on two different chips. The synchronization of image data information may be kept in the following ways:
(1) Based on the local time of chip 2, chip 1 may obtain the reference time of chip 2 by way of hardware communication with chip 2. The time stamps transmitted between systems are all based on the time of chip 2.
(2) The real-time image transmitted from chip 2 to chip 1 includes time stamp and frame ID information.
(3) The ROI coordinate data transmitted by the machine learning module of chip 1 to the AF module of chip 2 includes the time stamp and frame ID information of the real-time image (that is, at what point in time is the ROI calculated based on which real-time image).
(4) The depth map transmitted by the perception module of chip 1 to the AF module of chip 2 contains the time stamp and frame ID information of the real-time image (that is, at what point in time is the depth map aligned based on which real-time image).
(5) The AF module matches the image frame data according to the time stamp and frame ID information in steps (4) and (5), and accurately obtains the depth information of each ROI coordinate point.

It can be understood that the alignment of image data information may be implemented by using other algorithms.

In addition, if the photographing device does not have a distance sensor, existing focusing methods such as contrast CDAF focus or phase PDAF focus may be used to perform automatic focus control with the calibrated manual lens 100.

### (II), automatic zooming

The lens parameters include focal length, and the conversion relationships include a second conversion relationship between the rotation angle of the zooming motor and the focal length of the lens. The target rotation angle includes a first target rotation angle, and the first target rotation angle may be determined based on the second conversion relationship and the target focal length. Based on the target rotation angle, the processor 30 may control the rotation of the zooming motor to realize the automatic zooming function of the manual lens 100. For example, the second conversion relationship may be a function, and the distance information from the target focal length to the manual lens 100 may be directly brought into the function to determine the target rotation angle.

Optionally, the target focal length may be set by a user. In some embodiments, the target focal length may be determined based on a position of a target size of a target object in the live image captured by the manual lens 100 and a ratio of the target size to an area of the real-time image. The target size may be fixed or set by the user. Understandably, the target focal length may also be set in other ways.

Optionally, the result of automatic zooming may be that an area ratio of a main ROI in the real-time image is the largest. Generally, the upper and lower edges of the main ROI are close to the upper and lower edges of the real-time image. The specific area ratio after zooming may be set by the user. For example, when a value of 50% is set, it means that the height of the zoomed object is half of that of the real-time image.

In one example, the steps for realizing the automatic zooming function of the manual lens 100 are as follows:

When a user has selected the main ROI or the main ROI exists in the real-time image, the processor 30 may calculate the focal length after zooming according to the area ratio after zooming according to the position and area ratio of the main ROI (or the required magnification, reduction multiples), and control the zooming motor in a single step. In some embodiments, the current focal length of the manual lens may be displayed in real time during the zooming process. The reason for obtaining the position of the main ROI is as follows: during the zooming process, the ordinate of the center point of the main ROI may not be on a center line of the current screen. In such a case, the processor 30 may control the gimbal to adjust the main ROI to the center line during the zooming process. It should be nited that the ROI after automatic zooming may be blurred in the real-time image, but at this time the focal length of the manual lens 100 no longer changes. The processor 30 may complete the auto-focus process of the current real-time image according to the automatic focusing method described above. In some embodiments, the lens parameters may also include focusing distance, and the processor 30 may be configured to: based on a first target rotation angle, control the zooming motor to rotate, where the conversion relationships may include a first conversion relationship between the rotation angle of the zooming motor and the focusing distance of the lens. The target rotation angle includes a second target rotation angle, and the second target rotation angle may be determined based on the first conversion relationship and the distance information from the target object currently photographed by the manual lens 100 to the manual lens 100. The processor 30 is configured to: after controlling the rotation of the zooming motor based on the first target rotation angle, control, based on the second target rotation angle, the focusing motor to rotate. For details, reference may be made to the description of the automatic focusing process in the foregoing sections, and details are not repeated herein.

### (III) Automatic exposure

The lens parameters include an aperture, and the conversion relationships include a third conversion relationship between the rotation angle of the motor 20 and the aperture of the lens. The target rotation angle may be determined based on the third conversion relationship and the ambient light intensity at the current location of the photographing device. Based on the target rotation angle, the processor 30 controls the rotation of the aperture motor to realize the automatic exposure function of the manual lens 100. For example, the third conversion relationship may be a function, and the ambient light intensity of the environment where the photographing device is currently located may be directly brought into the function to determine the target rotation angle.

During automatic exposure, the processor may set the aperture size of the manual lens according to the light intensity of the current environment where the photographing device is located, and then determine, based on the third conversion relationship, the target rotation angle. For example, in a scene where the light is too dark, the manual lens may be adjusted to the maximum aperture in this case; if the light is too bright, the aperture size may be reduced.

In some embodiments, a method of controlling the photographing device is provided. With reference to FIG. 12, the method of controlling the photographing device may include steps S1201-S1202.

In S1201, when calibrating the lens parameters of a manual lens, obtain the lens parameters of the manual lens of a photographing device when the motor(s) is controlled to rotate to different angles. A parameter adjustment ring is sleeved on the manual lens, and the parameter adjustment ring is rotated by motor control so as to adjust the lens parameters of the manual lens.

In S1202, based on each angle and a corresponding lens parameter thereof, calibrate the conversion relationship between the rotation angle of the motor and the lens parameter of the lens, where when adjusting the lens parameter of the manual lens fully automatically or semi-automatically, control the motor to rotate to a target rotation angle so as to adjust the lens parameter of the manual lens to a target lens parameter, and the target rotation angle of the motor is determined based on the conversion relationship and the target lens parameter.

In some embodiments, the lens parameters include at least one of focusing distance, focal length, or aperture.

In some embodiments, the lens parameters include a variety of lens parameters, different types of lens parameters correspond to different parameter adjustment rings, and the different parameter adjustment rings are arranged along an optical axis of the manual lens.

In some embodiments, the different parameter adjustment rings are driven by different motors.

In some embodiments, the different angles are determined based on the driving information of the motor; or the different angles are obtained from an angle sensor on the motor; or the different angles are input externally.

In some embodiments, the lens parameters are obtained from an external input and/or detection by a sensor(s) on the photographing device.

In some embodiments, the lens parameters include focusing distance, and the different angles include: a first angle that the motor needs to rotate when the manual lens is aimed at photographing objects at different distances, and the sharpness of an image captured by the manual lens is greater than a preset sharpness threshold.

In some embodiments, the different distances include: a first distance, a second distance, and at least one distance between the first distance and the second distance, where the first distance is greater than the second distance.

In some embodiments, the method further includes: when a center of the manual lens is respectively aimed at the photographing objects at the first distance, the second distance, and the at least one distance between the first distance and the second distance, calibrating first angles of the motor corresponding to the first distance, the second distance, and the at least one distance between the first distance and the second distance, respectively.

In some embodiments, a focusing distance is obtained based on the detection of a distance sensor on the photographing device and/or an external input.

In some embodiments, the lens parameters include focal length, and the different angles include different second angles; the motor rotates to the different second angles based on a first user instruction, so that the manual lens is at different focal lengths.

In some embodiments, the different focal lengths include: a first focal length, a second focal length, and at least one focal length between the first focal length and the second focal length, where the first focal length is greater than the second focal length.

In some embodiments, the lens parameters also include the focusing distance of the photographing device with at least one of the different focal lengths; the different angles also include: a third angle to be rotated by the motor in the case where the photographing device has the at least one focal length, the manual lens is aimed at photographing objects at different distances, and the sharpness of the image captured by the manual lens is greater than a preset sharpness threshold.

In some embodiments, the different distances include: a third distance, a fourth distance, and at least one distance between the third distance and the fourth distance, where the third distance is greater than the fourth distance.

In some embodiments, the focusing distance is obtained based on the detection of a distance sensor on the photographing device and/or an external input.

In some embodiments, the lens parameters include aperture, and the different angles include different fourth angles; the motor rotates to different fourth angles based on the first user instruction, so that the manual lens is at different apertures.

In some embodiments, the different apertures include: a first aperture, a second aperture, and at least one aperture between the first aperture and the second aperture, where the first aperture is larger than the second aperture.

In some embodiments, the calibrating of the conversion relationship between the rotation angle of the motor and the lens parameters of the lens based on each angle and the corresponding lens parameter thereof includes: based on each angle and the corresponding lens parameter thereof, calibrating the conversion relationship between the rotation angle of the motor and the lens parameter of the lens by interpolation.

In some embodiments, the photographing device includes a semi-automatic adjustment mode in which the motor rotates based on a second user instruction when the photographing device is in the semi-automatic adjustment mode.

In some embodiments, the second user instruction is generated by a user operating the motor; or the second user instruction is generated by a user operating a handle, where the handle is configured to drive the motor to rotate; or the second user instruction is generated by operating an external control device.

In some embodiments, the method further includes: when the photographing device is in the semi-automatic adjustment mode, displaying a feature map of a real-time image captured by the manual lens by a display device; displaying a parameter scale in the feature map, where the parameter scale is configured to represent the range information of the lens parameter(s); and displaying a first scale position mark of a target lens parameter on the parameter scale and a second scale position mark of a current lens parameter on the parameter scale in a feature map, so as to instruct the user to input a second user instruction.

In some embodiments, the lens parameters include focusing distance, the feature map includes a depth map, and the conversion relationships include the first conversion relationship between the rotation angle of the motor and the focusing distance of the manual lens. In the depth map, the displayed positions of the depth information of different objects are determined based on the distances between the different objects and the photographing device and the first conversion relationship.

In some embodiments, the parameter scale includes a first parameter scale, and the first parameter scale is configured to represent the range information of the focusing distance of the manual lens; the target lens parameter includes the actual distance from the target object in the real-time image to the manual lens, the current lens parameter include the current focusing distance of the manual lens, and the first scale position mark is set at the position of the target object in the depth map.

In some embodiments, the actual distance is obtained based on the distance sensor on the photographing device.

In some embodiments, the distance sensor is arranged parallel to the manual lens.

In some embodiments, the second scale position mark includes a first arrow pointing to a position corresponding to the current focusing distance on the first parameter scale.

In some embodiments, the first parameter scale is displayed in a first direction of the depth map, and the extension direction of the first arrow is a second direction. The first direction is one of the height and width of the depth map, and the second direction is the other one of the height and width of the depth map.

In some embodiments, the first parameter scale is displayed on one side of the depth map, and the first arrow extends to two ends of the second direction.

In some embodiments, when the motor rotates based on the second user instruction, the first arrow moves along the first direction until the first arrow moves to the first scale position mark in the first direction.

In some embodiments, the lens parameters include focal length, and the conversion relationships include the second conversion relationship between the rotation angle of the motor and the focal length of the manual lens. In a real-time image, the display sizes and/or display positions of different objects are determined based on the actual sizes of the different objects in the real-time image and the second conversion relationship.

In some embodiments, the parameter scale includes a second parameter scale, and the second parameter scale is configured to represent the range information of the focal length of the manual lens. The target lens parameter includes the target focal length corresponding to the manual lens when the target object is displayed in the real-time image with the target size and/or target position. The current lens parameters include the current focal length of the manual lens.

In some embodiments, the first scale position mark includes a second arrow pointing to the corresponding target focal length on the second parameter scale.

In some embodiments, the second scale position mark includes a third arrow pointing to the current focal length corresponding to the second parameter scale.

In some embodiments, the second parameter scale is displayed in a third direction in the real-time image. The extension direction of the second arrow and the third arrow is the fourth direction. The third direction is one of the height and width of the real-time image, and the fourth direction is the other one of the height and width of the real-time image.

In some embodiments, the second parameter scale is displayed on a side of the real-time image.

In some embodiments, when the motor rotates based on the second user instruction, the third arrow moves along the third direction until it coincides with the second arrow in the third direction.

In some embodiments, the lens parameters also include focusing distance, and the adjustment of focusing distance is after the adjustment of focal length is finished.

In some embodiments, the lens parameters include an aperture, the feature map includes a brightness map, and the conversion relationships include a third conversion relationship between the rotation angle of the motor and the aperture of the lens.

In some embodiments, the parameter scale includes a third parameter scale, and the third parameter scale is configured to represent the range information of a brightness map; the target lens parameters include the target brightness of the target object in the real-time image; the current lens parameters include the current brightness of the target object in the real-time image, and the second scale position mark is set at the position of the target object in the brightness map.

In some embodiments, the target brightness is determined based on the brightness information of different positions of the real-time image.

In some embodiments, the first scale position mark includes a fourth arrow pointing to a position corresponding to the target brightness on the third parameter scale.

In some embodiments, the third parameter scale is displayed in a fifth direction in the brightness map, and the extension direction of the fourth arrow is a sixth direction. The fifth direction is one of the height and width of the brightness map, and the sixth direction is the other one of the height and width of the brightness map.

In some embodiments, the third parameter scale is displayed on one side of the brightness map, and the fourth arrow extends to two ends of the sixth direction.

In some embodiments, when the motor rotates based on the second user instruction, the second scale position mark moves along the fifth direction until it coincides with the fourth arrow in the fifth direction.

In some embodiments, in the feature map, the feature information of the target object is highlighted in a preset display mode.

In some embodiments, the method further includes: displaying a real-time image with a display device; marking a target object in the real-time image.

In some embodiments, the target object is selected from a plurality of objects captured by the manual lens.

In some embodiments, the selection is based on a user's instruction or based on captured image information.

In some embodiments, the photography device includes a fully automatic adjustment mode; the method includes: when the photographing device is in the fully automatic adjustment mode, controlling the rotation of the motor based on the target rotation angle.

In some embodiments, the lens parameters include focusing distance, and the conversion relationships include the first conversion relationship between the rotation angle of the motor and the focusing distance of the lens. The target rotation angle is determined based on the first conversion relationship and the distance information from the target object currently photographed by the manual lens to the manual lens.

In some embodiments, when the actual distance detected by the distance sensor on the photographing device is less than or equal to a preset distance threshold, the distance information is determined based on the actual distance.

In some embodiments, the controlling of the rotation of the motor based on the target rotation angle includes: when the actual distance is less than or equal to the preset distance threshold, controlling the motor to rotate by the target rotation angle.

In some embodiments, the photographing device is carried by a gimbal, and the method also includes: obtaining a real-time image taken by the manual lens with a first processor, and transmitting the real-time image to a second processor; obtaining the actual distance detected by the distance sensor with the second processor, performing feature extraction on the real-time image based on the actual distance to obtain a target object and first position information of the target object in the real-time image, sending the first location information to gimbal, and the gimbal rotating based on the first position information, so that the target object is at a preset position in the real-time image.

In some embodiments, the method further includes: transmitting depth information of each pixel of the real-time image and the first position information of the target object in the real-time image to the first processor by the second processor; based on the depth information of each pixel of the real-time image and/or the first position information of the target object in the real-time image, in the feature map of the real-time image, displaying in highlight the feature information in a preset display by the first processor.

In some embodiments, the depth information of each pixel of the real-time image carries time information and identity ID information corresponding to the real-time image.

In some embodiments, when the actual distance detected by the distance sensor on the photographing device is greater than the preset distance threshold, determine whether the lens parameters of the manual lens have been adjusted based on the image processing mode.

In some embodiments, the controlling of the motor to rotate based on the target rotation angle includes: when the actual distance is greater than the preset threshold, based on a preset rotation angle, controlling the motor to gradually rotate until the motor rotates to a target rotation angle.

In some embodiments, the controlling of the motor to gradually rotate until the motor rotates to the target rotation angle based on the preset rotation angle includes: based on the preset rotation angle, controlling the motor to rotate gradually by contrast CDAF focusing or phase PDAF focusing until the motor rotates to the target rotation angle.

In some embodiments, the lens parameters include focal length, and the conversion relationships include the second conversion relationship between the rotation angle of the motor and the focal length of the lens. The target rotation angle includes a first target rotation angle, and the first target rotation angle is determined based on the second conversion relationship and a target focal length.

In some embodiments, the target focal length is determined based on the actual size of the target object in the real-time image captured by the manual lens and a target size.

In some embodiments, the lens parameters also include focusing distance, and the motor includes a zooming motor and a focusing motor. The zooming motor is configured to adjust the focal length of the manual lens, and the focusing motor is configured to adjust the focusing distance of the manual lens. The controlling of the motor to rotate based on the target rotation angle includes: based on the first target rotation angle, controlling the zooming motor to rotate.

In some embodiments, the conversion relationships include a first conversion relationship between the rotation angle of the motor and the focusing distance of the lens, the target rotation angle includes a second target rotation angle, and the second target rotation angle is determined based on the first conversion relationship and the distance information from the target object currently captured by the manual lens to the manual lens. The method further includes: after controlling the rotation of the zooming motor based on the first target rotation angle, controlling the rotation of the focusing motor based on the second target rotation angle.

In some embodiments, the lens parameters include aperture, and the conversion relationships include the third conversion relationship between the rotation angle of the motor and the aperture of the lens. The target rotation angle is determined based on the third conversion relationship and the light intensity of the environment where the photographing device is currently located.

In some embodiments, the method further includes: obtaining a calibration data deletion instruction; according to the calibration data deletion instruction, deleting corresponding angles and lens parameters.

In some embodiments, the method further includes: generating a calibration file based on the angles and corresponding lens parameters and/or conversion relationships.

In some embodiments, the method further includes: obtaining a calibration data modification instruction; modifying corresponding angles and lens parameters in the calibration file according to the calibration data modification instruction.

For the specific implementation process of the method for controlling the photographing device in some embodiments of the present application, reference may be made to the description of the control system for the photographing device provided above, and details are not be repeated herein.

Some embodiments of the present application further provides a control system for a photographing device, and the control system includes:
a parameter adjustment ring, sleeved on the manual lens, the parameter adjustment ring can be rotated to adjust the lens parameter of the manual lens;
a motor, which is configured to drive a parameter adjustment ring to rotate;
a processor; and
a memory;
where the processor is configured to calibrate a conversion relationship between a rotation angle of the motor and a lens parameter of a manual lens, and the memory is configured to store the conversion relationship;
the processor is further configured to, when the manual lens is in a working state, perform a fully automatically adjustment or a semi-automatically adjustment on the lens parameter of the manual based on the conversion relationship.

In some embodiments, the adjustment mode of the manual lens includes a fully automatic adjustment mode, and the processor is further configured to: enter the fully automatic adjustment mode when receiving an instruction to start the fully automatic adjustment mode.

In some embodiments, the processor is further configured to: in the fully automatic adjustment mode, control the motor to rotate based on the target rotation angle.

In some embodiments, the lens parameters include focusing distance, and the conversion relationships include the first conversion relationship between the rotation angle of the motor and the focusing distance of the lens. The target rotation angle is determined based on the first conversion relationship and the distance information from the target object currently photographed by the manual lens to the manual lens.

In some embodiments, when the actual distance detected by the distance sensor on the photographing device is less than or equal to a preset distance threshold, the distance information is determined based on the actual distance.

In some embodiments, the processor is further configured to: when the actual distance is less than or equal to the preset distance threshold, control the target rotation angle of the motor.

In some embodiments, the processor is further configured to: when the actual distance detected by the distance sensor on the photographing device is greater than the preset distance threshold, determine, based on the image processing mode, whether the adjustment on the lens parameter of the manual lens is finished.

In some embodiments, the processor is further configured to: when the actual distance is greater than the preset threshold, control, based on the preset rotation angle, the motor to gradually rotate until the motor rotates to a target rotation angle.

In some embodiments, the processor is further configured to: based on the preset rotation angle, control the motor to rotate gradually by contrast CDAF focusing or phase PDAF focusing until the motor rotates to the target rotation angle.

In some embodiments, the manual lens adjustment mode includes a semi-automatic adjustment mode, and the processor is further configured to: when an instruction to start the semi-automatic adjustment mode is received, enter the semi-automatic adjustment mode.

In some embodiments, the processor is further configured to:

In the semi-automatic adjustment mode, display a feature map of an real-time image taken by the manual lens with the display device;

Display a parameter scale in the feature map, where the parameter scale is configured to represent range information of the lens parameter.

Display a first scale position mark of the target lens parameter on the parameter scale and a second scale position mark of a current lens parameter on the parameter scale in the feature map, so as to instruct a user to input a second user instruction.

In some embodiments, the lens parameters include focusing distance, the feature map includes a depth map, and the conversion relationships include the first conversion relationship between the rotation angle of the motor and the focusing distance of the manual lens.

In the depth map, the displayed positions of the depth information of different objects are determined based on the distances between the different objects and the photographing device and the first conversion relationship.

In some embodiments, the parameter scale includes a first parameter scale, and the first parameter scale is configured to represent the range information of the focusing distance of the manual lens.

The target lens parameter includes the actual distance from the target object in the real-time image to the manual lens, the current lens parameter include the current focusing distance of the manual lens, and the first scale position mark is set at the position of the target object in the depth map.

In some embodiments, the actual distance is obtained based on the distance sensor on the photographing device.

In some embodiments, the distance sensor is arranged parallel to the manual lens.

In some embodiments, the second scale position mark includes a first arrow pointing to a position corresponding to the current focusing distance on the first parameter scale.

In some embodiments, the first parameter scale is displayed in a first direction of the depth map, and the extension direction of the first arrow is a second direction. The first direction is one of the height and width of the depth map, and the second direction is the other one of the height and width of the depth map.

In some embodiments, the first parameter scale is displayed on one side of the depth map, and the first arrow extends to two ends of the second direction.

In some embodiments, when the motor rotates based on the second user instruction, the first arrow moves along the first direction until the first arrow moves to the first scale position mark in the first direction.

In some embodiments, the instruction is triggered by a user, or the instruction is triggered based on a photographing scene meeting a preset condition.

Some embodiments of the present application further provides a method for controlling a manual lens, the method includes:
Calibrating the conversion relationship between the rotation angle of the motor and the lens parameter of the manual lens, providing a parameter adjustment ring on the manual lens, where the parameter adjustment ring is rotated by a motor control to adjust the lens parameter of the manual lens, and storing the conversion relationship on the memory;

When the manual lens is in a working state, adjusting the lens parameter of the manual lens fully automatically or semi-automatically based on the conversion relationship.

In some embodiments, the adjustment mode of the manual lens includes a fully automatic adjustment mode, and the method further includes:
Entering the fully automatic adjustment mode when an instruction to start the fully automatic adjustment mode is received.

In some embodiments, the performing of the fully automatic adjustment on the lens parameters of the manual lens based on the conversion relationship includes:
In the fully automatic adjustment mode, controlling the motor to rotate based on the target rotation angle.

In some embodiments, the lens parameters include focusing distance, and the conversion relationships include the first conversion relationship between the rotation angle of the motor and the focusing distance of the lens. The target rotation angle is determined based on the first conversion relationship and the distance information from the target object currently photographed by the manual lens to the manual lens.

In some embodiments, when the actual distance detected by the distance sensor on the photographing device is less than or equal to a preset distance threshold, the distance information is determined based on the actual distance.

In some embodiments, the controlling of the rotation of the motor based on the target rotation angle includes:
When the actual distance is less than or equal to the preset distance threshold, controlling the motor to rotate by the target rotation angle.

In some embodiments, the method also includes:
When the actual distance detected by the distance sensor on the photographing device is greater than the preset distance threshold, determining whether the lens parameter of the manual lens has been adjusted based on the image processing mode.

In some embodiments, the controlling of the motor to rotate based on the target rotation angle includes:
When the actual distance is greater than the preset threshold, based on a preset rotation angle, controlling the motor to gradually rotate until the motor rotates to a target rotation angle.

In some embodiments, the controlling of the motor to gradually rotate until the motor rotates to the target rotation angle based on the preset rotation angle includes:
Based on the preset rotation angle, controlling the motor to rotate gradually by contrast CDAF focusing or phase PDAF focusing until the motor rotates to the target rotation angle.

In some embodiments, the manual lens adjustment mode includes a semi-automatic adjustment mode, and the method further includes:
When an instruction to start the semi-automatic adjustment mode is received, entering the semi-automatic adjustment mode.

In some embodiments, the method further includes:
In the semi-automatic adjustment mode, displaying a feature map of an real-time image taken by the manual lens with the display device;
Displaying a parameter scale in the feature map, where the parameter scale is configured to represent range information of the lens parameter;

Displaying a first scale position mark of the target lens parameter on the parameter scale and a second scale position mark of a current lens parameter on the parameter scale in the feature map, so as to instruct a user to input a second user instruction.

In some embodiments, the lens parameters include focusing distance, the feature map includes a depth map, and the conversion relationships include the first conversion relationship between the rotation angle of the motor and the focusing distance of the manual lens.

In the depth map, the displayed positions of the depth information of different objects are determined based on the distances between the different objects and the photographing device and the first conversion relationship.

In some embodiments, the parameter scale includes a first parameter scale, and the first parameter scale is configured to represent the range information of the focusing distance of the manual lens.

The target lens parameter includes the actual distance from the target object in the real-time image to the manual lens, the current lens parameter include the current focusing distance of the manual lens, and the first scale position mark is set at the position of the target object in the depth map.

In some embodiments, the actual distance is obtained based on the distance sensor on the photographing device.

In some embodiments, the distance sensor is arranged parallel to the manual lens.

In some embodiments, the second scale position mark includes a first arrow pointing to a position corresponding to the current focusing distance on the first parameter scale.

In some embodiments, the first parameter scale is displayed in a first direction of the depth map, and the extension direction of the first arrow is a second direction. The first direction is one of the height and width of the depth map, and the second direction is the other one of the height and width of the depth map.

In some embodiments, the first parameter scale is displayed on one side of the depth map, and the first arrow extends to two ends of the second direction.

In some embodiments, when the motor rotates based on the second user instruction, the first arrow moves along the first direction until the first arrow moves to the first scale position mark in the first direction.

In some embodiments, the instruction is triggered by a user, or the instruction is triggered based on a photographing scene meeting a preset condition.

For other related descriptions, reference may be made to the descriptions of the corresponding parts in the above-mentioned embodiments, and are not repeated herein.

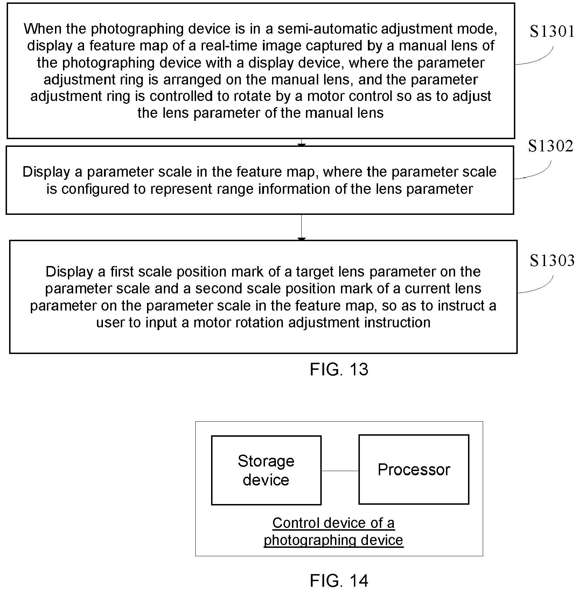

Some embodiments of the present application also provides a method for controlling a photographing device, with reference to FIG. 13, the method may include:
In S1301, when the photographing device is in a semi-automatic adjustment mode, displaying a feature map of a real-time image captured by a manual lens of the photographing device with a display device, where the parameter adjustment ring is arranged on the manual lens, and the parameter adjustment ring is controlled to rotate by a motor control so as to adjust the lens parameter of the manual lens;
In S1302, displaying a parameter scale in the feature map, where the parameter scale is configured to represent range information of the lens parameter;

In S1303, displaying a first scale position mark of a target lens parameter on the parameter scale and a second scale position mark of a current lens parameter on the parameter scale in the feature map, so as to instruct a user to input a motor rotation adjustment instruction.

In the above embodiments of the present application, the semi-automatic adjustment mode is the same as the semi-automatic adjustment mode described above. In addition, the motor rotation adjustment instruction is the second user instruction described above.

In some embodiments, the lens parameters include focusing distance, and the feature map includes a depth map. In the depth map, the positions where the depth information of different objects are displayed are determined based on the distances between the different objects and the photographing device and a pre-calibrated conversion relationship between the rotation angle of the motor and the focusing distance of the manual lens.

In some embodiments, the target lens parameters include the actual distance from the target object in the real-time image to the manual lens, the current lens parameters include the current focusing distance of the manual lens, and the first scale position mark is set at the position of a target object in the depth map.

In some embodiments, the actual distance is obtained based on the distance sensor on the photographing device.

In some embodiments, the distance sensor is arranged parallel to the manual lens.

In some embodiments, the second scale position mark includes a first arrow pointing to a position corresponding to the current focusing distance on the first parameter scale.

In some embodiments, the first parameter scale is displayed in a first direction of the depth map, and the extension direction of the first arrow is a second direction. The first direction is one of the height and width of the depth map, and the second direction is the other one of the height and width of the depth map.

In some embodiments, the first parameter scale is displayed on one side of the depth map, and the first arrow extends to two ends of the second direction.

In some embodiments, when the motor rotates based on the second user instruction, the first arrow moves along the first direction until the first arrow moves to the first scale position mark in the first direction.

In some embodiments, the process of calibrating the conversion relationship includes: obtaining the focusing distance of the manual lens of the photographing device when the motor is at each angle, and the motor rotating to different angles based on a first user instruction; based on each angle and a corresponding focusing distance thereof, calibrating the conversion relationship between the rotation angle of the motor and the focusing distance of the lens.

In some embodiments, the different angles include: a first angle the motor needs to rotate when the manual lens is aimed at photographing objects at different distances, and the sharpness of an image captured by the manual lens is greater than a preset sharpness threshold.

In some embodiments, the different distances include: a first distance, a second distance, and at least one distance between the first distance and the second distance, where the first distance is greater than the second distance.

In some embodiments, the focusing distance is obtained based on the distance sensor detection on the photographing device and/or an external input.

In some embodiments, the different angles are determined based on the driving information of the motor; or the different angles are obtained with an angle sensor on the motor; or the different angles are input from the outside.

In some embodiments, in the feature map, the feature information of the target object is displayed in highlight in a preset display mode.

In some embodiments, the method further includes: displaying the real-time image with a display device; and marking the target object in the real-time image.

In some embodiments, the target object is selected from a plurality of objects captured with the manual lens.

In some embodiments, the selection is based on a user's instruction or based on captured image information.

The control of the photographing device in some embodiments of the present application may be viewed with reference to the corresponding parts of the above descriptions, and will not be repeated herein.

Corresponding to the method for controlling the photographing device in the foregoing description, some embodiments of the present application also provides a control device for the photographing device. Referring to FIG. 14, the control device for controlling the photographing device may include one or more storage device and one or more processors.

The storage device is configured to store program instructions. The storage device stores executable instruction computer programs of the control method of the photographing device. The storage device may include at least one type of storage medium, the storage media include flash memory, hard disk, multimedia card, card-type memory (for example, SD or DX memory, etc.), random access memory (RAM), static random access memory (SRAM), read only memory (ROM), electrically erasable programmable read only memory (EEPROM), programmable read only memory (PROM), magnetic memory, magnetic disk, optical disk, etc. In addition, the control device of the photographing device may cooperate with a network storage device that performs a storage function of the memory through a network connection. The storage may be an internal storage unit of the control device of the photographing device, such as a hard disk or memory of the control device of the photographing device. The memory may also be an external storage device of the control device of the photographing device, such as a plug-in hard disk equipped on the control device of the photographing device, a smart memory card (SMC), a secure digital (SD) card, a flash memory card (Flash Card), etc. Further, the memory may also include both an internal storage unit of the control device of the photographing device and an external storage device. The memory may be configured to store computer programs and other programs and data needed by the device. The memory may also be used to temporarily store data that has been output or will be output.

The one or more processors may recall/invoke program instructions stored in a memory device. When the program instructions are executed, the one or more processors may be individually or jointly implement the method for controlling the photographing device as shown in FIG. 12 or FIG. 13 of the present application. The device for controlling the photographing device herein may be viewed with reference to the method for controlling the photographing device described above.

The processor may be a central processing unit (CPU), and may also be other general-purpose processors, digital signal processors (DSP), application specific integrated circuit (ASIC), field-programmable gate array (FPGA), or other programmable logic devices, discrete gate or transistor logic devices, discrete hardware components, etc. The general-purpose processor herein may be a microprocessor, or the processor may be any conventional processor, or the like.

Some embodiments also provide a photographing device control system, including a photographing device control device and the manual lens as described above.

In addition, some embodiments also provide further provides a computer-readable storage medium, on which a computer program is stored, and when the computer program is executed by a processor, the steps of the method for controlling a photographing device described above may are implemented.

The computer-readable storage medium may be an internal storage unit of the control system of the photographing device as described above, such as a hard disk or a memory. The computer-readable storage medium may also be an external storage device of the control system of the photographing device, for example, the device may be equipped with a plug-in hard disk, a smart memory card (SMC), an SD card, a flash memory card (Flash Card), and the like. Furthermore, the computer-readable storage medium may also include both an internal storage unit of the control system of the photographing device and an external storage device. The computer-readable storage medium may be used to store the computer program and other programs and data needed by the control system of the photographing device; it can also be used to temporarily store data that has been output or will be output.

A person of ordinary skill in the art can understand that all or part of the processes in the methods described above may be completed by computer programs to instruct relevant hardware. The program may be stored in a computer-readable storage medium. When the program is executed, it may include the procedures of the methods described above. The storage medium may be a magnetic disk, an optical disk, a read-only memory (ROM) or a random access memory (RAM), and the like.

The above disclosures are only part of the embodiments of the present application, and certainly cannot be used to limit the scope of the present application. Therefore, the equivalent changes made according to the claims of the present application still fall within the scope covered by the present application.

## Claims

1. A control system for a manual lens, **characterized in that** the control system comprises:
a parameter adjustment ring sleeved on the manual lens, wherein the parameter adjustment ring can be rotated to adjust the size of a lens parameter of the manual lens;
a motor, used to drive the parameter adjustment ring to rotate;
a processor; and
a memory;
wherein the processor is used to calibrate a conversion relationship between a rotation angle of the motor and the lens parameter of the manual lens, and the memory is used to store the conversion relationship;
the processor is further configured to automatically or semi-automatically adjust the lens parameter of the manual lens based on the conversion relationship when the manual lens is in a working state.

2. The control system for a manual lens according to claim 1, **characterized in that** the adjustment mode of the manual lens includes a fully automatic adjustment mode, and the processor is further configured to: enter the fully automatic adjustment mode when receiving an instruction to start the fully automatic adjustment mode.

3. The control system for a manual lens according to claim 2, **characterized in that** the processor is also used to:
in the fully automatic adjustment mode, automatically control the rotation of the motor based on a target rotation angle.

4. The control system for a manual lens according to claim 3, **characterized in that** the lens parameter includes focusing distance, and the conversion relationship includes the first conversion relationship between the rotation angle of the motor and the focusing distance of the lens, the target rotation angle is determined based on the first conversion relationship and distance information from a target object currently photographed by the manual lens to the manual lens.

5. The control system for a manual lens according to claim 4, **characterized in that** when an actual distance detected by a distance sensor on the photographing device is less than or equal to a preset distance threshold, the distance information is determined based on the actual distance.

6. The control system for a manual lens according to claim 5, **characterized in that** the processor is also used to:
when the actual distance is less than or equal to the preset distance threshold, control the motor to rotate by the target rotation angle.

7. The control system for a manual lens according to claim 4, **characterized in that** the processor is also used to: when the actual distance detected by the distance sensor on the photographing device is greater than the preset distance threshold, determine whether the lens parameter of the manual lens has been adjusted based on the image processing mode.

8. The control system for a manual lens according to claim 7, **characterized in that** the processor is also used to: when the actual distance is greater than the preset threshold, based on a preset rotation angle, control the motor to gradually rotate until the motor rotates to a target rotation angle.

9. The control system for a manual lens according to claim 7, **characterized in that** the processor is also used to:
based on the preset rotation angle, control the motor to rotate gradually by contrast CDAF focusing or phase PDAF focusing until the motor rotates to the target rotation angle.

10. The control system for a manual lens according to claim 1, **characterized in that** the manual lens adjustment mode includes a semi-automatic adjustment mode, and the processor is also used to: when an instruction to start the semi-automatic adjustment mode is received, enter the semi-automatic adjustment mode.

11. The control system for a manual lens according to claim 10, **characterized in that** the processor is also used to:
in the semi-automatic adjustment mode, displaying a feature map of an real-time image taken by the manual lens with the display device;
display a parameter scale in the feature map, wherein the parameter scale is configured to represent range information of the lens parameter;
display a first scale position mark of the target lens parameter on the parameter scale and a second scale position mark of a current lens parameter on the parameter scale in the feature map, so as to instruct a user to input a second user instruction.

12. The control system for a manual lens according to claim 11, **characterized in that** the lens parameter includes focusing distance, the feature map includes a depth map, and the conversion relationship includes a first conversion relationship between the rotation angle of the motor and the focusing distance of the manual lens;
in the depth map, the displayed positions of the depth information of different objects are determined based on the distances between the different objects and the photographing device and the first conversion relationship.

13. The control system for a manual lens according to claim 12, **characterized in that** the parameter scale includes a first parameter scale, and the first parameter scale is configured to represent the range information of the focusing distance of the manual lens;
the target lens parameter includes the actual distance from the target object in the real-time image to the manual lens, the current lens parameter includes the current focusing distance of the manual lens, and the first scale position mark is set at the position of the target object in the depth map.

14. The control system for a manual lens according to claim 13, **characterized in that** the actual distance is obtained based on a distance sensor.

15. The control system for a manual lens according to claim 14, **characterized in that** the distance sensor is arranged parallel to the manual lens.

16. The control system for a manual lens according to claim 13, **characterized in that** the second scale position mark includes a first arrow pointing to a position corresponding to the current focusing distance on the first parameter scale.

17. The control system for a manual lens according to claim 16, **characterized in that** the first parameter scale is displayed in a first direction of the depth map, and the extension direction of the first arrow is a second direction. The first direction is one of the height and width of the depth map, and the second direction is the other one of the height and width of the depth map.

18. The control system for a manual lens according to claim 17, **characterized in that** the first parameter scale is displayed on one side of the depth map, and the first arrow extends to two ends of the second direction.

19. The control system for a manual lens according to claim 17, **characterized in that** the motor rotates based on the second user instruction, the first arrow moves along the first direction until the first arrow moves to the first scale position mark in the first direction.

20. The control system for a manual lens according to claim 2 or 10, **characterized in that** the instruction is triggered by a user, or the instruction is triggered based on a photographing scene meeting a preset condition.

21. A control method for a manual lens, **characterized in that** the method comprises:
calibrating the conversion relationship between the rotation angle of the motor and the lens parameter of the manual lens, providing a parameter adjustment ring on the manual lens, wherein the parameter adjustment ring is rotated by a motor control to adjust the lens parameter of the manual lens, and storing the conversion relationship on the memory;
when the manual lens is in a working state, adjusting the lens parameter of the manual lens fully automatically or semi-automatically based on the conversion relationship.

22. The control method for a manual lens according to claim 21, **characterized in that** the adjustment mode of the manual lens includes a fully automatic adjustment mode, and the method further comprises:
entering the fully automatic adjustment mode when an instruction to start the fully automatic adjustment mode is received.

23. The control method for a manual lens according to claim 22, **characterized in that** the performing of the fully automatic adjustment on the lens parameters of the manual lens based on the conversion relationship includes:
in the fully automatic adjustment mode, controlling the motor to rotate based on the target rotation angle.

24. The control method for a manual lens according to claim 23, **characterized in that** the lens parameter includes focusing distance, and the conversion relationship includes the first conversion relationship between the rotation angle of the motor and the focusing distance of the lens; the target rotation angle is determined based on the first conversion relationship and the distance information from the target object currently photographed by the manual lens to the manual lens.

25. The control method for a manual lens according to claim 24, **characterized in that** when the actual distance detected by the distance sensor on the photographing device is less than or equal to a preset distance threshold, the distance information is determined based on the actual distance.

26. The control method for a manual lens according to claim 25, **characterized in that** the controlling of the rotation of the motor based on the target rotation angle includes:
when the actual distance is less than or equal to the preset distance threshold, controlling the motor to rotate by the target rotation angle.

27. The control method for a manual lens according to claim 24, **characterized in that** the method also comprises:
when the actual distance detected by the distance sensor on the photographing device is greater than the preset distance threshold, determining whether the lens parameter of the manual lens has been adjusted based on the image processing mode.

28. The control method for a manual lens according to claim 27, **characterized in that** the controlling of the motor to rotate based on the target rotation angle includes:
when the actual distance is greater than the preset threshold, based on a preset rotation angle, controlling the motor to gradually rotate until the motor rotates to a target rotation angle.

29. The control method for a manual lens according to claim 27, **characterized in that** the controlling of the motor to gradually rotate until the motor rotates to the target rotation angle based on the preset rotation angle includes:
based on the preset rotation angle, controlling the motor to rotate gradually by contrast CDAF focusing or phase PDAF focusing until the motor rotates to the target rotation angle.

30. The control method for a manual lens according to claim 21, **characterized in that** the manual lens adjustment mode includes a semi-automatic adjustment mode, and the method further comprises:
when an instruction to start the semi-automatic adjustment mode is received, entering the semi-automatic adjustment mode.

31. The control method for a manual lens according to claim 30, **characterized in that** the method further comprises:
in the semi-automatic adjustment mode, displaying a feature map of an real-time image taken by the manual lens with the display device;
displaying a parameter scale in the feature map, wherein the parameter scale is configured to represent range information of the lens parameter; and
displaying a first scale position mark of the target lens parameter on the parameter scale and a second scale position mark of a current lens parameter on the parameter scale in the feature map, so as to instruct a user to input a second user instruction.

32. The control method for a manual lens according to claim 31, **characterized in that** the lens parameter includes focusing distance, the feature map includes a depth map, and the conversion relationship includes the first conversion relationship between the rotation angle of the motor and the focusing distance of the manual lens;
in the depth map, the displayed positions of the depth information of different objects are determined based on the distances between the different objects and the photographing device and the first conversion relationship.

33. The control method for a manual lens according to claim 32, **characterized in that** the parameter scale includes a first parameter scale, and the first parameter scale is configured to represent the range information of the focusing distance of the manual lens;
the target lens parameter includes the actual distance from the target object in the real-time image to the manual lens, the current lens parameter include the current focusing distance of the manual lens, and the first scale position mark is set at the position of the target object in the depth map.

34. The control method for a manual lens according to claim 33, **characterized in that** the actual distance is obtained based on the distance sensor on the photographing device.

35. The control method for a manual lens according to claim 34, **characterized in that** the distance sensor is arranged parallel to the manual lens.

36. The control method for a manual lens according to claim 33, **characterized in that** the second scale position mark includes a first arrow pointing to a position corresponding to the current focusing distance on the first parameter scale.

37. The control method for a manual lens according to claim 36, **characterized in that** the first parameter scale is displayed in a first direction of the depth map, and the extension direction of the first arrow is a second direction. The first direction is one of the height and width of the depth map, and the second direction is the other one of the height and width of the depth map.

38. The control method for a manual lens according to claim 37, **characterized in that** the first parameter scale is displayed on one side of the depth map, and the first arrow extends to two ends of the second direction.

39. The control method for a manual lens according to claim 37, **characterized in that** when the motor rotates based on the second user instruction, the first arrow moves along the first direction until the first arrow moves to the first scale position mark in the first direction.

40. The control method for a manual lens according to claim 22 or 30, **characterized in that** the instruction is triggered by a user, or the instruction is triggered based on a photographing scene meeting a preset condition.

41. A control device for a manual lens, **characterized in that** the device comprises:
a storage device for storing program instructions; and
one or more processors to invoke the program instructions stored in the storage device, the one or more processors are individually or collectively configured to implement the method of any one of claims 21 to 40 when the program instructions are executed.

42. A control system for a manual lens, **characterized in that** the system comprises:
the control device for a manual lens according to claim 41; and
the manual lens.

43. A computer-readable storage medium, on which a computer program is stored, **characterized in that**, when the program is executed by a processor, the method according to any one of claims 21 to 40 is implemented.

44. A control system for a photographing device, **characterized in that** the photographing device includes a manual lens for taking images, and the control system comprises:
a parameter adjustment ring, sleeved on the manual lens, wherein the parameter adjustment ring is configured to adjust a lens parameter of the manual lens;
a motor configured to drive the parameter adjustment ring to rotate; a processor; and
a processor;
when calibrating a lens parameter of the manual lens, the motor is controlled to rotate to different angles, the processor is used to obtain the lens parameter of the manual lens when the motor is at each angle, and based on each angle and corresponding lens parameters, calibrate a conversion relationship between a rotation angle of the motor and the lens parameter of the manual lens; and
when the lens parameter of the manual lens is adjusted fully automatically or semi-automatically, the motor is controlled to rotate to a target angle of rotation to adjust the lens parameters of the manual lens to a target lens parameter, and the target rotation angle of the motor is determined based on the conversion relationship and the target lens parameter.

45. The control system for a photographing device according to claim 44, **characterized in that** the processor is also used to, when the manual lens is in a working state, adjust the lens parameter of the manual lens fully automatically or semi-automatically based on the conversion relationship.

46. The control system for a photographing device according to claim 45, **characterized in that** the adjustment mode of the manual lens includes a fully automatic adjustment mode, and the processor is further used to: enter the fully automatic adjustment mode when receiving an instruction to start the fully automatic adjustment mode.

47. The control system for a photographing device according to claim 45, **characterized in that** the adjustment mode of the manual lens includes a semi-automatic adjustment mode, and the processor is further used to: enter the semi-automatic adjustment mode when receiving an instruction to start the semi-automatic adjustment mode.

48. The control system for a photographing device according to claim 46 or 47, **characterized in that** the instruction is triggered by a user, or the instruction is triggered based on a photographing scene meeting a preset condition.

49. The control system for a photographing device according to claim 44, **characterized in that** the lens parameter includes at least one of focusing distance, focal length, or aperture.

50. The control system for a photographing device according to claim 49, **characterized in that** the lens parameter includes multiple types, different types of lens parameters correspond to different parameter adjustment rings, and the different parameter adjustment rings are arranged along an optical axis of the manual lens.

51. The control system for a photographing device according to claim 50, **characterized in that** different parameter adjustment rings are driven by different motors.

52. The control system for a photographing device according to claim 44, **characterized in that** the processor is electrically connected to the motor to determine the different angles based on driving information of the motor; or
the processor is electrically connected to an angle sensor on the motor to obtain the different angles; or
the different angles are externally input to the processor.

53. The control system for a photographing device according to claim 44, **characterized in that** the lens parameters are obtained through an external input and/or detected by a sensor on the photographing device.

54. The control system for a photographing device according to claim 44, **characterized in that** the lens parameters include focusing distance, and the different angles include:
a first angle that the motor needs to rotate when the manual lens is aimed at objects at different distances, and the sharpness of an image captured by the manual lens is greater than a preset sharpness threshold.

55. The control system for a photographing device according to claim 50, **characterized in that** the different distances include: a first distance, a second distance, and at least one distance between the first distance and the second distance, wherein the first distance is greater than the second distance.

56. The control system for a photographing device according to claim 55, **characterized in that** the processor is also used to: when a center of the manual lens is respectively aimed at the photographing objects at the first distance, the second distance, and the at least one distance between the first distance and the second distance, calibrate first angles of the motor corresponding to the first distance, the second distance, and the at least one distance between the first distance and the second distance, respectively.

57. The control system for a photographing device according to claim 50, **characterized in that** the distance is obtained based on the detection of a distance sensor on the photographing device and/or an external input.

58. The control system for a photographing device according to claim 44, **characterized in that** the lens parameters include focal length, and the different angles include different second angles;
the motor rotates to the different second angles based on a first user instruction, so that the manual lens is at different focal lengths.

59. The control system for a photographing device according to claim 58, **characterized in that** the different focal lengths include:
a first focal length, a second focal length, and at least one focal length between the first focal length and the second focal length, wherein the first focal length is greater than the second focal length.

60. The control system for a photographing device according to claim 58, **characterized in that** the lens parameters also include the focusing distance of the photographing device with at least one of the different focal lengths;
the different angles also include:
a third angle to be rotated by the motor in the case wherein the photographing device has the at least one focal length, the manual lens is aimed at photographing objects at different distances, and the sharpness of the image captured by the manual lens is greater than a preset sharpness threshold.

61. The control system for a photographing device according to claim 60, **characterized in that** the different distances include: a third distance, a fourth distance, and at least one distance between the third distance and the fourth distance, wherein the third distance is greater than the fourth distance.

62. The control system for a photographing device according to claim 60, **characterized in that** the distance is obtained based on the detection of a distance sensor on the photographing device and/or an external input.

63. The control system for a photographing device according to claim 44, **characterized in that** the lens parameters include aperture, and the different angles include different fourth angles;
the motor rotates to different fourth angles based on the first user instruction, so that the manual lens is at different apertures.

64. The control system for a photographing device according to claim 63, **characterized in that** the different apertures include:
a first aperture, a second aperture, and at least one aperture between the first aperture and the second aperture, wherein the first aperture is larger than the second aperture.

65. The control system for a photographing device according to claim 44, **characterized in that** the processor is used to:
based on each angle and the corresponding lens parameter thereof, calibrate the conversion relationship between the rotation angle of the motor and the lens parameter of the lens by interpolation.

66. The control system for a photographing device according to claim 44, **characterized in that** the photographing device includes a semi-automatic adjustment mode in which the motor rotates based on a second user instruction when the photographing device is in the semi-automatic adjustment mode.

67. The control system for a photographing device according to claim 66, **characterized in that** the second user instruction is generated by a user operating the motor; or
the second user instruction is generated by a user operating a handle, wherein the handle is configured to drive the motor to rotate; or
the second user instruction is generated by operating an external control device, wherein the external control device is communicatively connected to the processor via the photographing device, and the processor is configured to control the rotation of the motor based on the second user instruction.

68. The control system for a photographing device according to claim 66, **characterized in that** when the photographing device is in the semi-automatic adjustment mode, the processor is used to:
display a feature map of a real-time image captured by the manual lens by a display device;
display a parameter scale in the feature map, wherein the parameter scale is configured to represent the range information of the lens parameter; and
display a first scale position mark of a target lens parameter on the parameter scale and a second scale position mark of a current lens parameter on the parameter scale in a feature map, so as to instruct the user to input a second user instruction.

69. The control system for a photographing device according to claim 68, **characterized in that** the lens parameters include focusing distance, the feature map includes a depth map, and the conversion relationships include the first conversion relationship between the rotation angle of the motor and the focusing distance of the manual lens;
in the depth map, the displayed positions of the depth information of different objects are determined based on the distances between the different objects and the photographing device and the first conversion relationship.

70. The control system for a photographing device according to claim 69, **characterized in that** the parameter scale includes a first parameter scale, and the first parameter scale is configured to represent the range information of the focusing distance of the manual lens;
the target lens parameter includes the actual distance from the target object in the real-time image to the manual lens, the current lens parameter include the current focusing distance of the manual lens, and the first scale position mark is set at the position of the target object in the depth map.

71. The control system for a photographing device according to claim 70, **characterized in that** the actual distance is obtained based on the distance sensor on the photographing device.

72. The control system for a photographing device according to claim 71, **characterized in that** the distance sensor is arranged parallel to the manual lens.

73. The control system for a photographing device according to claim 70, **characterized in that** the second scale position mark includes a first arrow pointing to a position corresponding to the current focusing distance on the first parameter scale.

74. The control system for a photographing device according to claim 73, **characterized in that** the first parameter scale is displayed in a first direction of the depth map, and the extension direction of the first arrow is a second direction. The first direction is one of the height and width of the depth map, and the second direction is the other one of the height and width of the depth map.

75. The control system for a photographing device according to claim 74, **characterized in that** the first parameter scale is displayed on one side of the depth map, and the first arrow extends to two ends of the second direction.

76. The control system for a photographing device according to claim 74, **characterized in that** when the motor rotates based on the second user instruction, the first arrow moves along the first direction until the first arrow moves to the first scale position mark in the first direction.

77. The control system for a photographing device according to claim 68, **characterized in that** the lens parameters include focal length, and the conversion relationships include the second conversion relationship between the rotation angle of the motor and the focal length of the manual lens;
in the real-time image, the display sizes and/or display positions of different objects are determined based on the actual sizes of the different objects in the real-time image and the second conversion relationship.

78. The control system for a photographing device according to claim 77, **characterized in that** the parameter scale includes a second parameter scale, and the second parameter scale is configured to represent the range information of the focal length of the manual lens;
the target lens parameter includes the target focal length corresponding to the manual lens when the target object is displayed in the real-time image with the target size and/or target position, and the current lens parameters include the current focal length of the manual lens.

79. The control system for a photographing device according to claim 78, **characterized in that** the first scale position mark includes a second arrow pointing to the corresponding target focal length on the second parameter scale.

80. The control system for a photographing device according to claim 79, **characterized in that** the second scale position mark includes a third arrow pointing to the current focal length corresponding to the second parameter scale.

81. The control system for a photographing device according to claim 80, **characterized in that** the second parameter scale is displayed in a third direction in the real-time image. The extension direction of the second arrow and the third arrow is the fourth direction. The third direction is one of the height and width of the real-time image, and the fourth direction is the other one of the height and width of the real-time image.

82. The control system for a photographing device according to claim 81, **characterized in that** the second parameter scale is displayed on a side of the real-time image.

83. The control system for a photographing device according to claim 81, **characterized in that** when the motor rotates based on the second user instruction, the third arrow moves along the third direction until it coincides with the second arrow in the third direction.

84. The control system for a photographing device according to claim 77, **characterized in that** the lens parameters also include focusing distance, and the adjustment of focusing distance is after the adjustment of focal length is finished.

85. The control system for a photographing device according to claim 68, **characterized in that** the lens parameter includes an aperture, the feature map includes a brightness map, and the conversion relationships include a third conversion relationship between the rotation angle of the motor and the aperture of the lens.

86. The control system for a photographing device according to claim 85, **characterized in that** the parameter scale includes a third parameter scale, and the third parameter scale is configured to represent the range information of a brightness map;
the target lens parameters include the target brightness of the target object in the real-time image; the current lens parameters include the current brightness of the target object in the real-time image, and the second scale position mark is set at the position of the target object in the brightness map.

87. The control system for a photographing device according to claim 86, **characterized in that** the target brightness is determined based on the brightness information of different positions of the real-time image.

88. The control system for a photographing device according to claim 86, **characterized in that** the first scale position mark includes a fourth arrow pointing to a position corresponding to the target brightness on the third parameter scale.

89. The control system for a photographing device according to claim 88, **characterized in that** the third parameter scale is displayed in a fifth direction in the brightness map, and the extension direction of the fourth arrow is a sixth direction. The fifth direction is one of the height and width of the brightness map, and the sixth direction is the other one of the height and width of the brightness map.

90. The control system for a photographing device according to claim 89, **characterized in that** the third parameter scale is displayed on one side of the brightness map, and the fourth arrow extends to two ends of the sixth direction.

91. The control system for a photographing device according to claim 89, **characterized in that** when the motor rotates based on the second user instruction, the second scale position mark moves along the fifth direction until it coincides with the fourth arrow in the fifth direction.

92. The control system for a photographing device according to claim 68, **characterized in that** in the feature map, feature information of the target object is highlighted in a preset display mode.

93. The control system for a photographing device according to claim 68, **characterized in that** the processor is also used to:
display a real-time image with a display device; and
mark a target object in the real-time image.

94. The control system for a photographing device according to claim 93, **characterized in that** the target object is selected from a plurality of objects captured by the manual lens.

95. The control system for a photographing device according to claim 94, **characterized in that** the selection is based on a user's instruction or based on captured image information.

96. The control system for a photographing device according to claim 44, **characterized in that** the photography device includes a fully automatic adjustment mode; when the photographing device is in the fully automatic adjustment mode, the processor is used to:
control the rotation of the motor based on a target rotation angle.

97. The control system for a photographing device according to claim 96, **characterized in that** the lens parameter includes focusing distance,
the conversion relationship includes the first conversion relationship between the rotation angle of the motor and the focusing distance of the lens, and the target rotation angle is determined based on the first conversion relationship and the distance information from the target object currently photographed by the manual lens to the manual lens.

98. The control system for a photographing device according to claim 97, **characterized in that** when the actual distance detected by the distance sensor on the photographing device is less than or equal to a preset distance threshold, the distance information is determined based on the actual distance.

99. The control system for a photographing device according to claim 98, **characterized in that** the processor is used to:
when the actual distance is less than or equal to the preset distance threshold, control the motor to rotate by the target rotation angle.

100. The control system for a photographing device according to claim 99, **characterized in that** the photographing device is carried by a gimbal, the processor includes a first processor and a second processor;
the first processor is used to obtain a real-time image captured by the manual lens, and transmit the real-time image to the second processor;
the second processor is used to obtain an actual distance detected by a distance sensor, perform feature extraction on the real-time image based on the actual distance to obtain a target object and first position information of the target object in the real-time image, and send the first location information to a gimbal, and the gimbal rotates based on the first position information to make the target object at a preset position in the real-time image.

101. The control system for a photographing device according to claim 100, **characterized in that** the second processor is further used to transmit depth information of each pixel of the real-time image and the first position information of the target object in the real-time image to the first processor;
the first processor is used to, based on the depth information of each pixel of the real-time image and/or the first position information of the target object in the real-time image, display feature information of the target object in highlight in a preset display manner in a feature map of the real-time image.

102. The control system for a photographing device according to claim 100, **characterized in that** the depth information of each pixel of the real-time image carries time information and identity ID information corresponding to the real-time image.

103. The control system for a photographing device according to claim 97, **characterized in that** when the actual distance detected by the distance sensor on the photographing device is greater than the preset distance threshold, determine whether the lens parameters of the manual lens have been adjusted based on the image processing mode.

104. The control system for a photographing device according to claim 103, **characterized in that** the processor is used to:
when the actual distance is greater than the preset threshold, based on a preset rotation angle, control the motor to gradually rotate until the motor rotates to a target rotation angle.

105. The control system for a photographing device according to claim 104, **characterized in that** the processor is used to:
based on the preset rotation angle, control the motor to rotate gradually by contrast CDAF focusing or phase PDAF focusing until the motor rotates to the target rotation angle.

106. The control system for a photographing device according to claim 96, **characterized in that** the lens parameter includes focal length, and the conversion relationship includes the second conversion relationship between the rotation angle of the motor and the focal length of the lens, the target rotation angle includes a first target rotation angle, and the first target rotation angle is determined based on the second conversion relationship and a target focal length.

107. The control system for a photographing device according to claim 106, **characterized in that** the target focal length is determined based on a position of a target size of a target object in the live image captured by the manual lens and a ratio of the target size to an area of the real-time image.

108. The control system for a photographing device according to claim 106, **characterized in that** the lens parameter also includes focusing distance, the motor includes a zooming motor and a focusing motor, the zooming motor is used to adjust the focal length of the manual lens, the focusing motor is used to adjust the focusing distance of the manual lens; and the processor is used to:
control, based on a first target rotation angle, the zooming motor to rotate.

109. The control system for a photographing device according to claim 108, **characterized in that** the conversion relationship includes a first conversion relationship between the rotation angle of the motor and the focusing distance of the lens, the target rotation angle includes a second target rotation angle, the second target rotation angle is determined based on the first conversion relationship and distance information from a target object currently photographed by the manual lens to the manual lens; and
the processor is used to:
control the focusing motor to rotate based on the second target rotation angle after controlling the zooming motor to rotate based on the first target rotation angle.

110. The control system for a photographing device according to claim 96, **characterized in that** the lens parameter includes aperture, and the conversion relationship includes a third conversion relationship between the rotation angle of the motor and the aperture of the lens, and the target rotation angle is determined based on the third conversion relationship and a light intensity of an environment wherein the photographing device is currently located.

111. The control system for a photographing device according to claim 44, **characterized in that** the processor is used to:
obtain a calibration data deletion instruction; and
according to the calibration data deletion instruction, delete corresponding angles and lens parameters.

112. The control system for a photographing device according to claim 44, **characterized in that**
the processor is used to generate a calibration file based on each angle and corresponding lens parameters and/or conversion relationships.

113. The control system for a photographing device according to claim 112, **characterized in that** the processor is used to:
obtain a calibration data modification instruction; and
modify corresponding angles and lens parameters in the calibration file according to the calibration data modification instruction.

114. A control method for a photographing device, **characterized in that** the method comprises:
obtaining a lens parameters of a manual lens of the photographing device when a motor is at each angle, wherein a parameter adjustment ring is sleeved on the manual lens, the parameter adjustment ring is controlled by the motor to rotate so as to adjust the lens parameter of the manual lens, and the motor rotates to different angles based on a first user instruction;
calibrating, based on each angle and corresponding lens parameter thereof, a conversion relationship between a rotation angle of the motor and the lens parameter of the manual lens, wherein
during parameter adjustment, the motor is rotated to adjust the lens parameter of the manual lens, and a target rotation angle of the motor is determined based on the conversion relationship and a target lens parameter.

115. The control method for a photographing device according to claim 114, **characterized in that** the lens parameter include at least one of focusing distance, focal length, or aperture.

116. The control method for a photographing device according to claim 115, **characterized in that** the lens parameter includes a plurality types of lens parameters, the plurality types of lens parameters correspond to different parameter adjustment rings, and the different parameter adjustment rings are arranged along an optical axis of the manual lens.

117. The control method for a photographing device according to claim 116, **characterized in that** the different parameter adjustment rings are driven by different motors.

118. The control method for a photographing device according to claim 114, **characterized in that** the different angles are determined based on the driving information of the motor; or
the different angles are obtained from an angle sensor on the motor; or
the different angles are input externally.

119. The control method for a photographing device according to claim 114, **characterized in that** the lens parameter is obtained from an external input and/or detection by a sensor on the photographing device.

120. The control method for a photographing device according to claim 114, **characterized in that** the lens parameter includes focusing distance, and the different angles include:
a first angle that the motor needs to rotate when the manual lens is aimed at photographing objects at different distances, and the sharpness of an image captured by the manual lens is greater than a preset sharpness threshold.

121. The control method for a photographing device according to claim 120, **characterized in that** the different distances include: a first distance, a second distance, and at least one distance between the first distance and the second distance, wherein the first distance is greater than the second distance.

122. The control method for a photographing device according to claim 121, **characterized in that**
the method also comprises:
when a center of the manual lens is respectively aimed at the photographing objects at the first distance, the second distance, and the at least one distance between the first distance and the second distance, calibrating first angles of the motor corresponding to the first distance, the second distance, and the at least one distance between the first distance and the second distance, respectively.

123. The control method for a photographing device according to claim 120, **characterized in that** the distance is obtained based on the detection of a distance sensor on the photographing device and/or an external input.

124. The control method for a photographing device according to claim 114, **characterized in that** the lens parameter includes focal length, and the different angles include different second angles;
the motor rotates to the different second angles based on a first user instruction, so that the manual lens is at different focal lengths.

125. The control method for a photographing device according to claim 124, **characterized in that** the different focal lengths include:
a first focal length, a second focal length, and at least one focal length between the first focal length and the second focal length, wherein the first focal length is greater than the second focal length.

126. The control method for a photographing device according to claim 124, **characterized in that** the lens parameter also includes the focusing distance of the photographing device with at least one of the different focal lengths;
the different angles also include:
a third angle to be rotated by the motor in the case wherein the photographing device has the at least one focal length, the manual lens is aimed at photographing objects at different distances, and the sharpness of the image captured by the manual lens is greater than a preset sharpness threshold.

127. The control method for a photographing device according to claim 126, **characterized in that** the different distances include: a third distance, a fourth distance, and at least one distance between the third distance and the fourth distance, wherein the third distance is greater than the fourth distance.

128. The control method for a photographing device according to claim 126, **characterized in that** the distance is obtained based on the detection of a distance sensor on the photographing device and/or an external input.

129. The control method for a photographing device according to claim 114, **characterized in that** the lens parameter includes aperture, and the different angles include different fourth angles;
the motor rotates to different fourth angles based on the first user instruction, so that the manual lens is at different apertures.

130. The control method for a photographing device according to claim 129, **characterized in that** the different apertures include:
a first aperture, a second aperture, and at least one aperture between the first aperture and the second aperture, wherein the first aperture is larger than the second aperture.

131. The control method for a photographing device according to claim 114, **characterized in that** the calibrating, based on each angle and corresponding lens parameter thereof, of the conversion relationship between the rotation angle of the motor and the lens parameter of the manual lens includes:
calibrating, based on each angle and the corresponding lens parameter, the conversion relationship between the rotation angle of the motor and the lens parameter of the lens by interpolation.

132. The control method for a photographing device according to claim 114, **characterized in that** the photographing device includes a semi-automatic adjustment mode in which the motor rotates based on a second user instruction when the photographing device is in the semi-automatic adjustment mode.

133. The control method for a photographing device according to claim 132, **characterized in that** the second user instruction is generated by a user operating the motor; or
the second user instruction is generated by a user operating a handle,
wherein the handle is used to drive the motor to rotate; or
the second user instruction is generated by operating an external control device.

134. The control method for a photographing device according to claim 132, **characterized in that** the method also comprises:
when the photographing device is in the semi-automatic adjustment mode, displaying a feature map of a real-time image captured by the manual lens by a display device;
displaying a parameter scale in the feature map, wherein the parameter scale is configured to represent the range information of the lens parameter; and
displaying a first scale position mark of a target lens parameter on the parameter scale and a second scale position mark of a current lens parameter on the parameter scale in a feature map, so as to instruct the user to input a second user instruction.

135. The control method for a photographing device according to claim 134, **characterized in that** the lens parameter includes focusing distance, the feature map includes a depth map, and the conversion relationship includes the first conversion relationship between the rotation angle of the motor and the focusing distance of the manual lens;
in the depth map, the displayed positions of the depth information of different objects are determined based on the distances between the different objects and the photographing device and the first conversion relationship.

136. The control method for a photographing device according to claim 135, **characterized in that** the parameter scale includes a first parameter scale, and the first parameter scale is configured to represent the range information of the focusing distance of the manual lens;
the target lens parameter includes the actual distance from the target object in the real-time image to the manual lens, the current lens parameter include the current focusing distance of the manual lens, and the first scale position mark is set at the position of the target object in the depth map.

137. The control method for a photographing device according to claim 136, **characterized in that** the actual distance is obtained based on the distance sensor on the photographing device.

138. The control method for a photographing device according to claim 137, **characterized in that** the distance sensor is arranged parallel to the manual lens.

139. The control method for a photographing device according to claim 136, **characterized in that** the second scale position mark includes a first arrow pointing to a position corresponding to the current focusing distance on the first parameter scale.

140. The control method for a photographing device according to claim 139, **characterized in that** the first parameter scale is displayed in a first direction of the depth map, and the extension direction of the first arrow is a second direction. The first direction is one of the height and width of the depth map, and the second direction is the other one of the height and width of the depth map.

141. The control method for a photographing device according to claim 140, **characterized in that** the first parameter scale is displayed on one side of the depth map, and the first arrow extends to two ends of the second direction.

142. The control method for a photographing device according to claim 140, **characterized in that** the motor rotates based on the second user instruction, the first arrow moves along the first direction until the first arrow moves to the first scale position mark in the first direction.

143. The control method for a photographing device according to claim 134, **characterized in that** the lens parameters include focal length, and the conversion relationships include the second conversion relationship between the rotation angle of the motor and the focal length of the manual lens;
in the real-time image, the display sizes and/or display positions of different objects are determined based on the actual sizes of the different objects in the real-time image and the second conversion relationship.

144. The control method for a photographing device according to claim 143, **characterized in that** the parameter scale includes a second parameter scale, and the second parameter scale is configured to represent the range information of the focal length of the manual lens;
the target lens parameter includes the target focal length corresponding to the manual lens when the target object is displayed in the real-time image with the target size and/or target position, and the current lens parameters include the current focal length of the manual lens.

145. The control method for a photographing device according to claim 144, **characterized in that** the first scale position mark includes a second arrow pointing to the corresponding target focal length on the second parameter scale.

146. The control method for a photographing device according to claim 145, **characterized in that** the second scale position mark includes a third arrow pointing to the current focal length corresponding to the second parameter scale.

147. The control method for a photographing device according to claim 146, **characterized in that** the second parameter scale is displayed in a third direction in the real-time image. The extension direction of the second arrow and the third arrow is the fourth direction. The third direction is one of the height and width of the real-time image, and the fourth direction is the other one of the height and width of the real-time image.

148. The control method for a photographing device according to claim 146, **characterized in that** the second parameter scale is displayed on a side of the real-time image.

149. The control method for a photographing device according to claim 146, **characterized in that** when the motor rotates based on the second user instruction, the third arrow moves along the third direction until it coincides with the second arrow in the third direction.

150. The control method for a photographing device according to claim 143, **characterized in that** the lens parameters also include focusing distance, and the adjustment of focusing distance is after the adjustment of focal length is finished.

151. The control method for a photographing device according to claim 134, **characterized in that** the lens parameter includes an aperture, the feature map includes a brightness map, and the conversion relationships include a third conversion relationship between the rotation angle of the motor and the aperture of the lens.

152. The control method for a photographing device according to claim 151, **characterized in that** the parameter scale includes a third parameter scale, and the third parameter scale is configured to represent the range information of a brightness map;
the target lens parameters include the target brightness of the target object in the real-time image; the current lens parameters include the current brightness of the target object in the real-time image, and the second scale position mark is set at the position of the target object in the brightness map.

153. The control method for a photographing device according to claim 152, **characterized in that** the target brightness is determined based on the brightness information of different positions of the real-time image.

154. The control method for a photographing device according to claim 152, **characterized in that** the first scale position mark includes a fourth arrow pointing to a position corresponding to the target brightness on the third parameter scale.

155. The control method for a photographing device according to claim 154, **characterized in that** the third parameter scale is displayed in a fifth direction in the brightness map, and the extension direction of the fourth arrow is a sixth direction. The fifth direction is one of the height and width of the brightness map, and the sixth direction is the other one of the height and width of the brightness map.

156. The control method for a photographing device according to claim 155, **characterized in that** the third parameter scale is displayed on one side of the brightness map, and the fourth arrow extends to two ends of the sixth direction.

157. The control method for a photographing device according to claim 155, **characterized in that** when the motor rotates based on the second user instruction, the second scale position mark moves along the fifth direction until it coincides with the fourth arrow in the fifth direction.

158. The control method for a photographing device according to claim 134, **characterized in that** in the feature map, feature information of the target object is highlighted in a preset display mode.

159. The control method for a photographing device according to claim 134, **characterized in that** the method further comprises:
displaying a real-time image with a display device; and
marking a target object in the real-time image.

160. The control method for a photographing device according to claim 159, **characterized in that** the target object is selected from a plurality of objects captured by the manual lens.

161. The control method for a photographing device according to claim 160, **characterized in that** the selection is based on a user's instruction or based on captured image information.

162. The control method for a photographing device according to claim 114, **characterized in that** the photography device includes a fully automatic adjustment mode; the method comprises:
when the photographing device is in the fully automatic adjustment mode, controlling the rotation of the motor based on a target rotation angle.

163. The control method for a photographing device according to claim 162, **characterized in that** the lens parameter includes focusing distance,
the conversion relationship includes the first conversion relationship between the rotation angle of the motor and the focusing distance of the lens, and the target rotation angle is determined based on the first conversion relationship and the distance information from the target object currently photographed by the manual lens to the manual lens.

164. The control method for a photographing device according to claim 163, **characterized in that** when the actual distance detected by the distance sensor on the photographing device is less than or equal to a preset distance threshold, the distance information is determined based on the actual distance.

165. The control method for a photographing device according to claim 164, **characterized in that** the controlling of the motor to rotate based on the target rotation angle includes:
when the actual distance is less than or equal to the preset distance threshold, controlling the motor to rotate by the target rotation angle.

166. The control method for a photographing device according to claim 165, **characterized in that** the photographing device is carried by a gimbal, the method further comprises:
obtaining a real-time image captured by the manual lens, and transmitting the real-time image to a second processor by a first processor;
obtaining an actual distance detected by a distance sensor, performing feature extraction on the real-time image based on the actual distance to obtain a target object and first position information of the target object in the real-time image, and sending the first location information to a gimbal by the second processor, and the gimbal rotating based on the first position information to make the target object at a preset position in the real-time image.

167. The control method for a photographing device according to claim 166, **characterized in that** the method further comprises:
transmitting, by the second processor, depth information of each pixel of the real-time image and the first position information of the target object in the real-time image to the first processor;
displaying, based on the depth information of each pixel of the real-time image and/or the first position information of the target object in the real-time image, feature information of the target object in highlight in a preset display manner in a feature map of the real-time image by the first processor.

168. The control method for a photographing device according to claim 167, **characterized in that** the depth information of each pixel of the real-time image carries time information and identity ID information corresponding to the real-time image.

169. The control method for a photographing device according to claim 163, **characterized in that** when the actual distance detected by the distance sensor on the photographing device is greater than the preset distance threshold, determine whether the lens parameters of the manual lens have been adjusted based on the image processing mode.

170. The control method for a photographing device according to claim 169, **characterized in that** the controlling of the rotation of the motor based on the target rotation angle includes:
when the actual distance is greater than the preset threshold, based on a preset rotation angle, controlling the motor to gradually rotate until the motor rotates to a target rotation angle.

171. The control method for a photographing device according to claim 170, **characterized in that** the controlling of the motor to gradually rotate until the motor rotates to a target rotation angle based on a preset rotation angle includes:
based on the preset rotation angle, controlling the motor to rotate gradually by contrast CDAF focusing or phase PDAF focusing until the motor rotates to the target rotation angle.

172. The control method for a photographing device according to claim 162, **characterized in that** the lens parameter includes focal length, and the conversion relationship includes the second conversion relationship between the rotation angle of the motor and the focal length of the lens, the target rotation angle includes a first target rotation angle, and the first target rotation angle is determined based on the second conversion relationship and a target focal length.

173. The control method for a photographing device according to claim 172, **characterized in that** the target focal length is determined based on a position of a target size of a target object in the live image captured by the manual lens and a ratio of the target size to an area of the real-time image.

174. The control method for a photographing device according to claim 172, **characterized in that** the lens parameter also includes focusing distance, the motor includes a zooming motor and a focusing motor, the zooming motor is used to adjust the focal length of the manual lens, the focusing motor is used to adjust the focusing distance of the manual lens;
the controlling of the rotation of the motor based on the target rotation angle includes:
controlling, based on a first target rotation angle, the zooming motor to rotate.

175. The control method for a photographing device according to claim 174, **characterized in that** the conversion relationship includes a first conversion relationship between the rotation angle of the motor and the focusing distance of the lens, the target rotation angle includes a second target rotation angle, the second target rotation angle is determined based on the first conversion relationship and distance information from a target object currently photographed by the manual lens to the manual lens; and
the method further comprises:
controlling the focusing motor to rotate based on the second target rotation angle after controlling the zooming motor to rotate based on the first target rotation angle.

176. The control method for a photographing device according to claim 162, **characterized in that** the lens parameter includes aperture,
the conversion relationship includes a third conversion relationship between the rotation angle of the motor and the aperture of the lens, and the target rotation angle is determined based on the third conversion relationship and a light intensity of an environment wherein the photographing device is currently located.

177. The control method for a photographing device according to claim 114, **characterized in that** the method further comprises:
obtaining a calibration data deletion instruction; and
according to the calibration data deletion instruction, deleting corresponding angles and lens parameters.

178. The control method for a photographing device according to claim 114, **characterized in that** the method further comprises:
generating a calibration file based on each angle and corresponding lens parameters and/or conversion relationships.

179. The control method for a photographing device according to claim 178, **characterized in that** the method further comprises:
obtaining a calibration data modification instruction; and
modifying corresponding angles and lens parameters in the calibration file according to the calibration data modification instruction.

180. A control device for a photographing device, **characterized in that** the device comprises:
a storage device for storing program instructions; and
one or more processors to invoke the program instructions stored in the storage device, the one or more processors are individually or collectively configured to implement the method of any one of claims 114 to 179 when the program instructions are executed.

181. A control device for a photographing device, **characterized in that** the system comprises:
the control device for a manual lens according to claim 180; and
the manual lens.

182. A computer-readable storage medium, on which a computer program is stored, **characterized in that**, when the program is executed by a processor, the method according to any one of claims 114 to 179 is implemented.

183. A control method for a photographing device, **characterized in that** the method comprises:
when the photographing device is in a semi-automatic adjustment mode, displaying a feature map of a real-time image captured by a manual lens of the photographing device with a display device, wherein the parameter adjustment ring is arranged on the manual lens, and the parameter adjustment ring is controlled to rotate by a motor control so as to adjust the lens parameter of the manual lens;
displaying a parameter scale in the feature map, wherein the parameter scale is configured to represent range information of the lens parameter; and
displaying a first scale position mark of a target lens parameter on the parameter scale and a second scale position mark of a current lens parameter on the parameter scale in the feature map, so as to instruct a user to input a motor rotation adjustment instruction.

184. The control method for a photographing device according to claim 183, **characterized in that** the lens parameter includes focusing distance, and the feature map includes a depth map;
in the depth map, the displayed positions of depth information of different objects are determined based on distances between the different objects and the photographing device and a pre-calibrated conversion relationship between a rotation angle of the motor and the focusing distance of the manual lens.

185. The control method for a photographing device according to claim 184, **characterized in that** the target lens parameter includes the actual distance from the target object in the real-time image to the manual lens, the current lens parameter include the current focusing distance of the manual lens, and the first scale position mark is set at the position of the target object in the depth map.

186. The control method for a photographing device according to claim 185, **characterized in that** the actual distance is obtained based on the distance sensor on the photographing device.

187. The control method for a photographing device according to claim 186, **characterized in that** the distance sensor is arranged parallel to the manual lens.

188. The control method for a photographing device according to claim 185, **characterized in that** the second scale position mark includes a first arrow pointing to a position corresponding to the current focusing distance on the first parameter scale.

189. The control method for a photographing device according to claim 188, **characterized in that** the first parameter scale is displayed in a first direction of the depth map, and the extension direction of the first arrow is a second direction. The first direction is one of the height and width of the depth map, and the second direction is the other one of the height and width of the depth map.

190. The control method for a photographing device according to claim 189, **characterized in that** the first parameter scale is displayed on one side of the depth map, and the first arrow extends to two ends of the second direction.

191. The control method for a photographing device according to claim 189, **characterized in that** the motor rotates based on the second user instruction, the first arrow moves along the first direction until the first arrow moves to the first scale position mark in the first direction.

192. The control method for a photographing device according to claim 184, **characterized in that** a process of calibrating the conversion relationship includes:
obtaining focusing distance of the manual lens of the photographing device when the motor is at each angle, wherein the motor rotates to different angles based on a first user instruction;
calibrating the conversion relationship between the rotation angle of the motor and the focusing distance of the lens based on each angle and corresponding focusing distance thereof.

193. The control method for a photographing device according to claim 192, **characterized in that** the different angles include:
a first angle that the motor needs to rotate when the manual lens is aimed at photographing objects at different distances, and the sharpness of an image captured by the manual lens is greater than a preset sharpness threshold.

194. The control method for a photographing device according to claim 193, **characterized in that** the different distances include: a first distance, a second distance, and at least one distance between the first distance and the second distance, wherein the first distance is greater than the second distance.

195. The control method for a photographing device according to claim 194, **characterized in that** the distance is obtained based on the detection of a distance sensor on the photographing device and/or an external input.

196. The control method for a photographing device according to claim 192, **characterized in that** the different angles are determined based on the driving information of the motor; or
the different angles are obtained from an angle sensor on the motor; or
the different angles are input externally.

197. The control method for a photographing device according to claim 183, **characterized in that** in the feature map, feature information of the target object is highlighted in a preset display mode.

198. The control method for a photographing device according to claim 183, **characterized in that** the method further comprises:
displaying a real-time image with a display device; and
marking a target object in the real-time image.

199. The control method for a photographing device according to claim 198, **characterized in that** the target object is selected from a plurality of objects captured by the manual lens.

200. The control method for a photographing device according to claim 199, **characterized in that** the selection is based on a user's instruction or based on captured image information.

201. A control device for a photographing device, **characterized in that** the device comprises:
a storage device for storing program instructions; and
one or more processors to invoke the program instructions stored in the storage device, the one or more processors are individually or collectively configured to implement the method of any one of claims 183 to 200 when the program instructions are executed.

202. A control device for a photographing device, **characterized in that** the system comprises:
the control device for a manual lens according to claim 201; and
the manual lens.

203. A computer-readable storage medium, on which a computer program is stored, **characterized in that**, when the program is executed by a processor, the method according to any one of claims 183 to 200 is implemented.
